# EUROPEAN PATENT APPLICATION

(11) **EP 4 815 565 A1**
(43) Date of publication of application: **30.09.2026**
(21) Application number: 24906309.0
(22) Date of filing: 16.12.2024
(51) Int. Cl.: H04W 40/02

(54) **COMMUNICATION METHOD AND RELATED DEVICE**

(30) Priority: 19.12.2023 CN 202311762403
(71) Applicant: Huawei Technologies Co., Ltd., Shenzhen, Guangdong 518129 (CN)
(72) Inventor: ZHANG, Lele, Shenzhen, Guangdong 518129 (CN); YU, Haifeng, Shenzhen, Guangdong 518129 (CN); LI, Chuanwei, Shenzhen, Guangdong 518129 (CN); LIU, Guoquan, Shenzhen, Guangdong 518129 (CN); WANG, Jian, Shenzhen, Guangdong 518129 (CN)
(74) Representative: MERH-IP Matias Erny Reichl Hoffmann Patentanwälte PartG mbB
(86) International application number: PCT/CN2024/139709
(87) International publication number: WO 2025/130828

(57) **Abstract**

A communication method and a related apparatus are disclosed, and are applied to the field of network sensing. In this application, a first node may obtain accumulated delay information of N routing paths, and determine, based on at least the accumulated delay information of the N routing paths, a target routing topology between the first node and a root node. The first node and the root node belong to a same network domain, and a path through which a packet of the first node passes when being transmitted in a network includes the first node and the root node. A shorter delay in transmitting a packet between nodes in a network domain indicates higher stability in transmitting a packet through a routing topology with a shorter delay. Therefore, in this application, a target routing topology for transmitting a packet between nodes in a same network domain is selected based on the obtained accumulated delay information of the N routing paths, so that a low-delay packet transmission routing path can be coordinated between the nodes. Transmitting a packet of a node through the target routing topology can ensure reliability of an end-to-end delay.

## Description

This application claims priority to Chinese Patent Application No. 202311762403.5, filed with the China National Intellectual Property Administration on December 19, 2023 and entitled "COMMUNICATION METHOD AND RELATED APPARATUS", which is incorporated herein by reference in its entirety.

### TECHNICAL FIELD

This application relates to the field of network sensing technologies, in particular, to wireless communication technologies, and specifically, to a communication method and a related apparatus.

### BACKGROUND

With development of wireless technologies, the wireless technologies are increasingly used because of competitiveness in terms of easy deployment, easy maintenance, and low costs. The wireless technologies may be usually used in a wireless communication system. The wireless communication system usually includes a plurality of nodes, and the nodes communicate with each other to transmit information. The plurality of nodes may be networked to form a network domain, and a node in the network domain communicates with another node in the network in a connectionless or connection-oriented manner. A channel for transmitting information between nodes is referred to as a routing path. A larger quantity of nodes through which the routing path passes indicates a higher probability of generating a long delay.

In the industry, packets are usually transmitted based on a plurality of different protocols through routing paths. In some solutions, a link-quality-based routing protocol for low-power internet of things (routing protocol for low-power and lossy network, RPL) is used to route and transmit a packet. The protocol specifies that a link metric value for constructing a tree topology route is a packet loss rate (ETX). However, the packet loss rate still has a specific limitation on a delay, and cannot accurately reflect a delay of a routing path. In some other solutions, a packet is transmitted through flooding in a protocol. However, a broadcast storm is likely to be caused and conflicts with communication. Consequently, a delay is further increased, and it is difficult to ensure low-delay communication for end-to-end transmission of a network message.

Therefore, in the wireless communication system, how to effectively ensure end-to-end low-delay communication and further ensure stability of information transmission is a hot topic being studied by persons skilled in the art.

### SUMMARY

Embodiments of this application provide a communication method and a related apparatus, to ensure end-to-end low-delay communication and further ensure stability of information transmission.

**According to a first aspect,** an embodiment of this application provides a communication method. The method includes: obtaining accumulated delay information of N routing paths, and determining a target routing topology between a first node and a root node based on at least the accumulated delay information of the N routing paths, where N is an integer and N≥1. Accumulated delay information of a first routing path indicates a delay of a packet of the first node reaching the root node through the first routing path, and the first routing path is any one of the N routing paths. The target routing topology is at least one of the N routing paths, and accumulated delay information corresponding to the target routing topology satisfies a first condition.

The first node and the root node belong to a same network domain (for example, represented as a first network domain). For example, the first network domain includes the root node and one or more child nodes, and the first node belongs to the one or more child nodes.

Optionally, the method may be applied to the first node, for example, performed by a hardware module and/or a software module in the first node. For ease of understanding, the following uses an example in which the first node performs the method for description.

In this application, all the N routing paths can support transmission of the packet of the first node to the root node, and each routing path has corresponding accumulated delay information. Accumulated delay information of a routing path from a node A to a node B refers to a delay (or referred to as an end-to-end delay) of packet transmission between the node A and the node B.

A shorter delay in transmitting a packet between nodes in a network domain indicates higher stability in transmitting a packet through a routing topology with a shorter delay. Therefore, in this application, a target routing topology for transmitting a packet between nodes in a same network domain is selected based on the obtained accumulated delay information of the N routing paths, so that a low-delay packet transmission routing path can be coordinated between the nodes. Optionally, the target routing topology may be a routing path with a shortest accumulated delay. Transmitting a packet of a node through the target routing topology can ensure reliability of an end-to-end delay.

In some solutions, both the first node and the root node support a wireless communication technology, and the transmission of the packet of the first node between the first node and the root node is wireless transmission.

**In a possible implementation of the first aspect**, the method further includes: obtaining a hop count of the N routing paths; and determining the target routing topology between the first node and the root node based on at least the accumulated delay information of the N routing paths includes: determining the target routing topology between the first node and the root node based on the accumulated delay information of the N routing paths and the hop count of the N routing paths.

In the foregoing implementation, a larger hop count indicates a less stable delay, because each hop of the routing path may cause flapping, resulting in delay accumulation, and further resulting in an unstable route. Therefore, in this application, during route construction, evaluation may be performed based on accumulated delay information of a routing path and a hop count of the routing path, to determine the target routing topology between the first node and the root node, so that reliability of an end-to-end delay can be ensured.

**In another possible implementation of the first aspect**, when there are routing paths that satisfy a hop count constraint in the N routing paths, the target routing topology is a routing path that satisfies the hop count constraint and that is with a smallest hop count in the N routing paths.

In the foregoing implementation, a rule of the hop count constraint may be followed during routing path construction. In a same communication environment in which a hop count is considered, a routing path with a smaller hop count is more stable. Therefore, when there are the routing paths that satisfy the hop count constraint in the N routing paths, the routing path with the smallest hop count may be selected as the target routing topology, to further ensure reliability of the end-to-end delay.

**In another possible implementation of the first aspect**, when there are a plurality of routing paths that satisfy a hop count constraint in the N routing paths, the target routing topology is a routing path that satisfies the hop count constraint and that is with a shortest delay in the N routing paths.

A larger hop count indicates a less stable delay, because each hop of the routing path may cause flapping, resulting in delay accumulation, and further resulting in an unstable route. However, a smaller hop count does not necessarily indicate a stable delay. Therefore, during route construction, evaluation may be performed based on accumulated delay information of a routing path, a hop count of the routing path, and a followed rule of a hop count constraint. In the foregoing implementation, the path with the shortest delay is selected when the hop count constraint is satisfied, so that a delay of the routing path can be reduced and the delay can be more stable.

For example, the hop count constraint is two hops. Routing paths for a packet of a node A to reach the root node include a three-hop routing path with a delay of 63 ms, a two-hop routing path with a delay of 68 ms, and a two-hop routing path with a delay of 70 ms. Because the three-hop routing path exceeds the hop count constraint, the node A may select the routing path with the shortest delay (68 ms) in the two two-hop routing paths as the target routing topology.

**In another possible implementation of the first aspect**, when there is no routing path that satisfies the hop count constraint in the N routing paths, the target routing topology is a routing path with a shortest delay in the N routing paths.

A larger hop count indicates a less stable delay, because each hop of the routing path may cause flapping, resulting in delay accumulation, and further resulting in an unstable route. However, a smaller hop count does not necessarily indicate a stable delay. Therefore, during route construction, evaluation may be performed based on accumulated delay information of a routing path, a hop count of the routing path, and a followed rule of a hop count constraint. In the foregoing implementation, the routing path with the shortest delay is selected when the hop count constraint is satisfied, so that a delay of transmitting a packet through the routing path can be more stable.

For example, the hop count constraint is two hops. Routing paths for a packet of a node A to reach the root node include a three-hop path with a delay of 63 ms, a three-hop path with a delay of 68 ms, and a three-hop routing path with a delay of 78 ms. Because the three-hop paths exceed the hop count constraint, when there is no routing path that satisfies the hop count constraint, to ensure delay stability as much as possible, the node A may select the routing path with the shortest delay (63 ms) in the three three-hop routing paths as the target routing topology.

**In another possible implementation of the first aspect**, the hop count constraint is that the hop count satisfies a second condition, and the hop count is associated with a quantity of forwarding hops of the packet of the first node reaching the root node.

The second condition may be that a hop count of each of the N routing paths is less than or is less than or equal to a preset value (the preset value may be, for example, two hops).

Optionally, the hop count of each routing path is equal to the quantity of forwarding hops of the packet of the first node reaching the root node, or the hop count of each routing path is equal to the quantity of forwarding hops plus 1.

**In another possible implementation of the first aspect**, hop count alarm information is sent to the root node when a hop count of the target routing topology does not satisfy the hop count constraint.

In the foregoing implementation, the root node can perform troubleshooting on nodes in time based on an abnormality of a hop count between the nodes in the network domain, to ensure delay stability.

**In another possible implementation of the first aspect**, the method further includes: broadcasting a first packet, where the first packet includes hop count constraint indication information of the first network domain. The hop count constraint indication information indicates a constraint condition that a hop count between a second node and the root node needs to satisfy, and the second node is a node other than the first node in the first network domain.

In some cases, the hop count constraint indication information is carried in a packet and broadcast. Optionally, the hop count constraint indication information is carried in a packet and broadcast by the root node. The hop count constraint indication information indicates that a hop count from each node that expects to join the first network domain to the root node should not exceed the hop count constraint. In this application, stability of a delay in a same network domain can be ensured by using the preset hop count constraint indication information.

**In another possible implementation of the first aspect**, N≥2, and an optimal target routing topology is a routing path with a smallest hop count in the N routing paths. When there are at least two routing paths with a smallest hop count in the N paths, the target routing topology is a routing path with a shortest delay in the at least two routing paths with the smallest hop count.

**In another possible implementation of the first aspect**, the method further includes: sending a second packet to a first neighboring node of the first node, where the second packet includes the accumulated delay information of the target routing topology between the first node and the root node, and the first neighboring node of the first node is connected to the first node in a point-to-point manner.

When nodes form a network, the nodes in the network perform network communication in a connectionless or connection-oriented manner. In some cases, connection-oriented means that two nodes in the network establish a point-to-point connection. In this case, a message may be sent through point-to-point communication. In the foregoing implementation, an accumulated delay of each hop is carried in the packet of the first node and broadcast for a neighboring node of the first node to select a route. For example, if a distance between a node A and a node B is one hop, the node A is connected to the node B in a point-to-point manner.

**In another possible implementation of the first aspect**, the first node is connected to the root node in a point-to-point manner, and obtaining the accumulated delay information of the N routing paths includes: determining information about a delay between the first node and the root node, where accumulated delay information of a second routing path is the information about the delay between the first node and the root node, and the second routing path is one of the N routing paths.

In the foregoing implementation, a case in which the first node is the root node when N=1 is provided.

**In another possible implementation of the first aspect**, obtaining the accumulated delay information of the N routing paths includes: obtaining accumulated delay information of a target routing topology between the first neighboring node of the first node and the root node, where the first neighboring node of the first node is connected to the first node in the point-to-point manner; determining information about a delay between the first node and the first neighboring node of the first node; and determining accumulated delay information of a second routing path based on the information about the delay between the first node and the first neighboring node of the first node and the accumulated delay information of the target routing topology between the first neighboring node of the first node and the root node, where the second routing path is one of the N routing paths, and the second routing path passes through the first neighboring node of the first node.

In the foregoing implementation, a case in which the first node is a common node (for example, the first node is a node A, and the node A may be a parent node or a child node) is provided. For example, a delay between the first neighboring node (for example, a node B) of the first node and the root node and a delay between the node A and the node B are added to obtain accumulated delay information of the packet of the first node reaching the root node through the second routing path.

**In another possible implementation of the first aspect**, obtaining the accumulated delay information of the target routing topology between the first neighboring node of the first node and the root node includes: receiving a third packet from the first neighboring node of the first node, where the third packet includes the accumulated delay information of the target routing topology between the first neighboring node of the first node and the root node.

Correspondingly, when the first node is a relay node, the first node may receive a packet broadcast by a neighboring node for route selection.

**In another possible implementation of the first aspect**, the method further includes: transmitting a measurement signal to the first neighboring node of the first node, where the measurement signal is used to determine the information about the delay between the first node and the first neighboring node of the first node.

In the foregoing implementation, a heartbeat packet between the first node and a neighboring node of the first node carries the measurement signal, or the measurement signal is directly used as a heartbeat packet to maintain a link relationship.

**In another possible implementation of the first aspect**, the method further includes: broadcasting a fourth packet, where the fourth packet includes timestamp information, and the timestamp information is used by a second neighboring node of the first node to determine the target routing topology.

In the foregoing implementation, the first node broadcasts a packet to all neighboring nodes. In some cases, the timestamp information may be carried in the packet, and information about a delay between the first node and the second neighboring node of the first node is updated by using a timestamp (which may also be understood as that the delay is obtained based on a difference between a packet timestamp and a receiving moment). When the delay between the first node and the second neighboring node becomes longer, a link between the first node and the second neighboring node is interrupted, or a lower delay occurs in another neighboring node, another routing path is switched to transmit the packet. The timestamp is set to further ensure low-delay communication.

Optionally, the second neighboring node may be a child node (namely, a lower-level node) of the first node in the first network domain, or may be a parent node (namely, an upper-level node) of the first node or a sibling node (namely, a same-level node) at a same layer.

**In another possible implementation of the first aspect**, the method further includes: receiving a second measurement signal from the first neighboring node; and obtaining the information about the delay between the first node and the first neighboring node based on the second measurement signal.

Optionally, before receiving the second measurement signal from the first neighboring node, the method further includes:
sending a first measurement signal to the first neighboring node, where the first measurement signal is used to trigger sending of the second measurement signal.

In the foregoing implementation, the first measurement signal is used to trigger the first neighboring node of the first node to send the second measurement signal to the first node, so that the first node receives the measurement signal from the first neighboring node (for example, the first node can learn a distance between the first node and the first neighboring node).

**In another possible implementation of the first aspect**, determining the information about the delay between the first node and the first neighboring node of the first node includes: determining the delay between the first node and the first neighboring node of the first node based on delay information in a first time period.

In the foregoing implementation, a delay between the first node and a neighboring node of the first node is usually not an instantaneous value obtained through a single measurement, but may be an average value in a past period of time.

**In another possible implementation of the first aspect**, the delay between the first node and the first neighboring node of the first node is an average value of delay information in the first time period.

**In another possible implementation of the first aspect**, the first time period includes at least one time slice. Determining the delay between the first node and the first neighboring node of the first node based on the delay information in the first time period includes: determining the delay between the first node and the first neighboring node of the first node based on delay information corresponding to the at least one time slice and a weight corresponding to the at least one time slice.

Optionally, a plurality of pieces of delay information are obtained in the first time period, and each piece of delay information corresponds to one time slice.

In the foregoing implementation, a delay of a routing path is usually an average value in a time period, but a link quality change cannot be well detected by using the average value. For example, link quality of a node is always stable in the past three days, and sufficient average samples are accumulated, so that when a link changes, route switching is extremely slow because a change in an average value is smoothed out by a large amount of historical data. In this application, a weighted average delay value is obtained by weighting an average delay value, so that delay reliability can be effectively ensured.

**In another possible implementation of the first aspect**, each of the at least one time slice has a same length, or there are a plurality of time slices in the first time period, and there are at least two time slices with different duration in the plurality of time slices.

**In another possible implementation of the first aspect**, there are the plurality of time slices in the first time period, and the plurality of time slices correspond to different weights.

**In another possible implementation of the first aspect**, a time slice that is closer to current time in the at least one time slice corresponds to a higher weight.

**In another possible implementation of the first aspect**, the method further includes: receiving a fifth packet from the root node, where the fifth packet includes one or more of length indication information of the first time period, time slice length indication information, time slice weight indication information, and the like.

**In another possible implementation of the first aspect**, the method further includes: sending the third packet to the root node through the target routing topology.

In the foregoing implementation, when there is only one target routing topology, the first node reports the packet through the target routing topology.

**In another possible implementation of the first aspect**, the target routing topology corresponds to M of the N routing paths, N is an integer and N≥2, and M is an integer and M≥2. The method further includes: sending M third packets to the root node through the M routing paths, where each of the M packets is correspondingly sent through each of the M routing paths.

In the foregoing implementation, when there are M target routing topologies, the first node reports M packets through the M target routing topologies. For example, in some deterministic delay scenarios (for example, residential energy alarm data needs to be reported to the root node within 100 ms), the first node may simultaneously send a plurality of pieces of same packet data to a primary parent node and a secondary parent node based on a feature of a plurality of parent nodes in a routing protocol. In this way, packets may be transmitted on different links, and it can be ensured that other packets are not affected even if an abnormality occurs on a link. This enhances robustness and reduces a delay caused by retransmission due to a packet loss.

Optionally, a multi-fed and selective receiving feature is triggered only by a source node. In other words, only the source node sends redundant packets to the primary parent node and the secondary parent node. A relay node does not trigger multi-fed and selective receiving again during forwarding, to prevent a forwarding storm.

**In another possible implementation of the first aspect**, the method further includes: receiving a query packet from the root node, where the query packet is used to query for route configuration information of the first node; and feeding back the route configuration information of the first node to the root node, where the route configuration information includes one or more of time slice length information of the first node, time slice weight information of the first node, the hop count constraint indication information of the first network domain, and the like.

**In another possible implementation of the first aspect**, the method further includes: updating accumulated delay information of at least one of the N routing paths, and determining the target routing topology between the first node and the root node based on updated accumulated delay information of the N routing paths.

In the foregoing implementation, a time interval of route switching may be sensed by updating the accumulated delay information of the routing path, to ensure stability of the target routing topology between the first node and the root node.

**In another possible implementation of the first aspect**, a delay includes one or more of a data packet delay, a data packet jitter, a jitter delay of a neighboring node of the first node, and the like.

**According to a second aspect**, an embodiment of this application provides a communication method, including: receiving a packet from a first node; and updating a routing table based on the packet from the first node, where the routing table indicates that a next-hop node of a target routing topology passing through a second node is the first node, and the second node is a neighboring node of a root node.

Optionally, a data packet from the first node may be forwarded by the second node to the root node.

In the foregoing method, the root node may update, based on the packet of the first node, accumulated delay information of the packet of the first node reaching the root node through different routing paths, so that reliability of an end-to-end delay can be ensured.

**According to a third aspect,** an embodiment of this application provides a communication apparatus. The communication apparatus includes a module or a unit configured to implement the method described in any one of the first aspect or the possible implementations of the first aspect.

**According to a fourth aspect,** an embodiment of this application provides a communication apparatus. The communication apparatus includes a module or a unit configured to implement the method described in any one of the second aspect or the possible implementations of the second aspect.

**According to a fifth aspect,** an embodiment of this application provides a communication apparatus. The communication apparatus includes at least one processor and a communication interface. The communication interface is configured to input and/or output information, and the at least one processor is configured to invoke a computer program stored in at least one memory, to implement the method described in any one of the first aspect or the possible implementations of the first aspect.

**According to a sixth aspect,** an embodiment of this application provides a communication apparatus. The communication apparatus includes at least one processor and a communication interface. The communication interface is configured to input and/or output information, and the at least one processor is configured to invoke a computer program stored in at least one memory, to implement the method described in any one of the second aspect or the possible implementations of the second aspect.

**According to a seventh aspect,** this application provides a chip. The chip includes a module or a unit configured to implement the method described in any one of the first aspect or the possible implementations. The module may be a software module or a hardware module.

**According to an eighth aspect,** an embodiment of this application provides a communication system. The communication system includes a first node and a root node, and the first node is communicatively connected to the root node. The first node is configured to implement the method according to any one of the possible implementations of the first aspect, or is configured to implement the method according to any one of the possible implementations of the second aspect.

Further, the communication system further includes a second node. The first node, the second node, and the root node may belong to a same network domain, and the first node, the second node, and the root node may be located on a same routing path for transmitting a packet of the first node.

**According to a ninth aspect,** an embodiment of this application provides a terminal. The terminal includes the communication apparatus according to any one of the third aspect to the seventh aspect. Further, the terminal may be an intelligent terminal or a transportation means like a vehicle, an uncrewed aerial vehicle, or a robot.

**According to a tenth aspect,** an embodiment of this application provides a computer-readable storage medium. The computer-readable storage medium is configured to store instructions or a computer program. When the instructions or the computer program is executed, the method according to any one of the possible implementations of the first aspect or the method according to any one of the possible implementations of the second aspect is implemented.

**According to an eleventh aspect,** this application provides a computer program product. The computer program product includes computer instructions. When the instructions are run on at least one processor, the method according to any one of the first aspect and the second aspect or the possible implementations of the first aspect and the second aspect can be implemented. The computer program product may be a software installation package. When the foregoing method needs to be used, the computer program product may be downloaded and executed on a compute device.

For beneficial effects of the technical solutions provided in the third aspect to the eleventh aspect of this application, refer to the beneficial effects of the technical solutions in the first aspect and the second aspect. Details are not described herein again.

### BRIEF DESCRIPTION OF DRAWINGS

The following briefly describes accompanying drawings used in descriptions of embodiments.
FIG. 1 is a diagram of a network domain in a star topology structure according to an embodiment of this application;
FIG. 2 is a diagram of a network domain in a tree multi-hop topology structure according to an embodiment of this application;
FIG. 3 is a diagram of a wireless BMS scenario according to an embodiment of this application;
FIG. 4 is a diagram of a network domain in a mesh topology structure according to an embodiment of this application;
FIG. 5 is a diagram of a smart home scenario according to an embodiment of this application;
FIG. 6 is a diagram of a packet transmission routing path according to an embodiment of this application;
FIG. 7 is a schematic flowchart of a communication method according to an embodiment of this application;
FIG. 8A and FIG. 8B are diagrams of a format of a measurement frame according to an embodiment of this application;
FIG. 9 is a diagram of delays of different nodes in different time slices according to an embodiment of this application;
FIG. 10 is a diagram of a target routing topology according to an embodiment of this application;
FIG. 11 is a diagram of another target routing topology according to an embodiment of this application;
FIG. 12 is a diagram of still another target routing topology according to an embodiment of this application;
FIG. 13 is a diagram of a format of a packet M5 according to an embodiment of this application;
FIG. 14 is a diagram of a format of a packet M6 according to an embodiment of this application;
FIG. 15 is a diagram of a format of another packet M6 according to an embodiment of this application;
FIG. 16 is a diagram of a format of still another packet M6 according to an embodiment of this application;
FIG. 17 is a diagram of a routing table according to an embodiment of this application;
FIG. 18 is a schematic flowchart of another communication method according to an embodiment of this application;
FIG. 19 is a diagram of a structure of a communication apparatus 190 according to an embodiment of this application;
FIG. 20 is a diagram of a structure of a communication apparatus 200 according to an embodiment of this application; and
FIG. 21 is a diagram of a structure of a communication apparatus 210 according to an embodiment of this application.

### DESCRIPTION OF EMBODIMENTS

In this application, terms such as "first" and "second" are used for distinguishing between same items or similar items with basically same roles and functions. Persons skilled in the art may understand that the terms such as "first" and "second" do not limit a quantity or an execution sequence, and the terms such as "first" and "second" do not indicate a definite difference. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

It should be understood that, in this application, "at least one" means one or more, and "a plurality of" means two or more. In addition, "equal to" in this application may be used together with "greater than", or may be used together with "less than". When "equal to" and "greater than" are used together, a technical solution corresponding to "greater than" is used; and when "equal to" and "less than" are used together, a technical solution corresponding to "less than" is used.

The following first describes related names or terms in this application, to facilitate understanding by persons skilled in the art.

### 1. Node (node)

A node is a device having a communication capability, and includes but is not limited to one or more of user equipment, a network device, an industrial device, and the like. The user equipment includes a handheld terminal, a wearable terminal, a transportation means, a vehicle-mounted device, a sensing device, a smart home device, a leisure and entertainment device, or the like. The handheld terminal includes but is not limited to a mobile phone, a tablet, a notebook computer, or the like. The wearable device includes but is not limited to a headset, a smart band, a smartwatch, smart glasses, or the like. The transportation means includes but is not limited to a vehicle, a ship, an aircraft, rail transport (like a subway and a high-speed railway), a logistics robot (like an automated guided vehicle (automated guided vehicle, AGV)), or the like. The vehicle-mounted device includes but is not limited to a domain controller (domain controller, DC), a screen, a microphone, a speaker, an electronic key, keyless entry, a startup system controller, a battery management system (battery management system, BMS), a battery pack, a cell, or the like. The sensing device includes but is not limited to a camera, a radar, a lidar, an illumination sensor, a temperature sensor, a humidity sensor, or the like. The smart home device includes but is not limited to a projector, a smart television, a smart refrigerator, a smart home gateway, a security device, or the like. The leisure and entertainment device is, for example, a virtual reality (virtual reality, VR) device, a mixed reality (mixed reality, MR) device, a massage chair, a home theater, a game control device, or a 4D cinema cabin.

The network device includes but is not limited to a router, a switch, a base station, or the like. The industrial device is, for example, an industrial robot or a mechanical arm.

The node in embodiments of this application may be used in various scenarios such as intelligent vehicles, smart homes, intelligent terminals, smart manufacturing, or smart exhibition halls. In some application scenarios or some network types, a device having a similar communication capability may not be referred to as a node. However, for ease of description, devices having a communication capability are collectively referred to as nodes in embodiments of this application.

It should be understood that the communication method, the communication apparatus, the communication system, the node, or the like in embodiments of this application is applicable to a plurality of networks, for example, is applicable to a wired communication network, a wireless communication network, or a network that combines wired communication and wireless communication. For example, the wireless communication network includes a network connected by using the following communication technologies: SparkLink (SparkLink, or NearLink) 802.11b/g, Bluetooth (Bluetooth), Zigbee (Zigbee), a radio frequency identification (radio frequency identification, RFID) technology, an ultra-wideband (ultra-wideband, UWB) technology, a wireless short-range communication system, or the like; or a long-range connection technology including radio access type technologies such as a long term evolution (long term evolution, long term evolution)-based communication technology, a 5th generation mobile communication technology (5th generation mobile networks or 5th generation wireless systems, 5th-Generation, 5G or 5G technology for short), a global system for mobile communications (global System for mobile communications, GSM), a general packet radio service (general packet radio Service, GPRS), a universal mobile telecommunications system (universal mobile telecommunications system, UMTS). For another example, the wired communication network includes a network connected by using the following communication technologies: one or more of an optical fiber connection technology, an in-vehicle wired communication technology, a controller area network (controller area network, CAN), a local interconnect network (local interconnect network, LIN) bus, a CAN flexible data-rate (CAN flexible data-rate, CAN FD), an automotive Ethernet, or the like.

### 2. Network domain

The network domain usually includes a plurality of nodes, and the nodes may communicate with each other to transmit data. The nodes in the network domain may have different identities or different capabilities.

A vehicle is used as an example. There may be a plurality of network domains in a vehicle. The network domain is a system including a group of nodes having a communication relationship and a communication connection relationship (namely, a communication link) between the nodes, and is usually used to complete a specific function.

For example, one network domain may include one primary node (for example, a root node) and at least one secondary node (for example, a child node), and the root node and the child node may communicate with each other, or child nodes may communicate with each other. The root node may manage the child node, has a function of allocating a resource, and is responsible for allocating a resource to the child node. The child node is scheduled by the root node, and communicates with the root node and/or another child node by using the resource allocated by the root node. For a network domain, any two nodes in the network domain may communicate with each other based on communication addresses.

In some specific implementation scenarios, the primary node may also be referred to as a management (grant, G) node, a G node, or a control node, and the secondary node may also be referred to as a terminal (terminal, T) or T node. A communication link from the G node to the T node may be referred to as a G link or a downlink, and a communication link from the T node to the G node may be referred to as a T link or an uplink.

It should be understood that identities of the management node and the terminal node are not absolute, and are merely example names for distinguishing operations performed by communication nodes in a possible connection case. In some implementation processes, a node may be a management node, or may be a terminal node. In some scenarios, one node belongs to two or even more network domains at the same time, serves as a terminal node in a part of network domains, and may serve as a management node in another part of network domains. For ease of understanding, such a node is represented as a G(T) node in some embodiments.

A connection between nodes in a network domain usually follows a specific topology structure, for example, a star topology structure, a tree topology structure, or a mesh (mesh) topology structure.

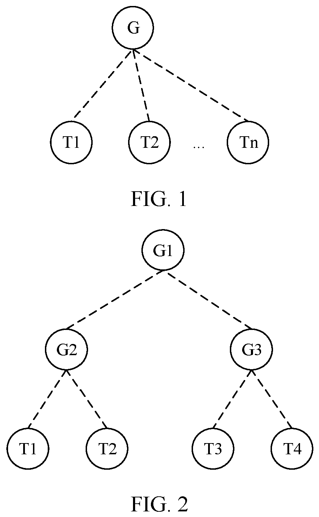

For example, FIG. 1 is a diagram of a network domain in a star topology structure. The network domain shown in FIG. 1 includes a G node and a plurality of T nodes (for example, a T1 node, a T2 node, ..., and a Tn node). The G node serves as a root node, and may also serve as a general management node. The plurality of T nodes serve as child nodes, and may also be considered as managed nodes. Each T node is connected to the G node, and a connection relationship is represented by a dashed line. Communication between the G node and the T node may be bidirectional unicast, or may be broadcast communication. Optionally, the topology structure shown in FIG. 1 is applicable to an in-vehicle communication scenario. In an application example of the communication topology shown in FIG. 1, the G node may be a telematics box (telematics BOX, T-BOX), the T node may be a user terminal in a vehicle, and the user terminal may be, for example, a mobile phone, a headset, a speaker, or a vehicle-mounted device. The T-BOX may also be referred to as a remote vehicle-mounted terminal or an internet of vehicles communication terminal. For example, the T-BOX may establish a communication connection to the mobile phone, to implement control such as opening a door, locking a door, controlling a vehicle window, and turning on/off an air conditioner.

FIG. 2 is a diagram of a network domain in a tree multi-hop topology structure. The network domain shown in FIG. 2 includes a G1 node, a G2 node, a G3 node, a T1 node, a T2 node, a T3 node, and a T4 node. The G1 node may serve as a root node (or may be considered as a general management node), and the G2 node, the G3 node, the T1 node, the T2 node, the T3 node, and the T4 node serve as child nodes, or may be considered as managed nodes. The T1 node and the T2 node are connected to the G2 node, the T3 node and the T4 node are connected to the G3 node, and the G2 node and the G3 node are connected to the G1 node. The G2 node may be represented as G2(T), and the G3 node may be represented as G3(T). The G2 node is used as an example. For communication between the G2 node and the G1 node, the G2 node may serve as a T node, and the G1 node may serve as a G node. For communication between the G2 node and the T1 node, the G2 node may serve as a G node, and the T1 node may serve as a T node. With reference to FIG. 2, communication between the G node and the T node may be bidirectional unicast, or may be broadcast. Communication between T nodes is forwarded by the G node, and a manner of sending information in the communication process may include unicast and/or broadcast.

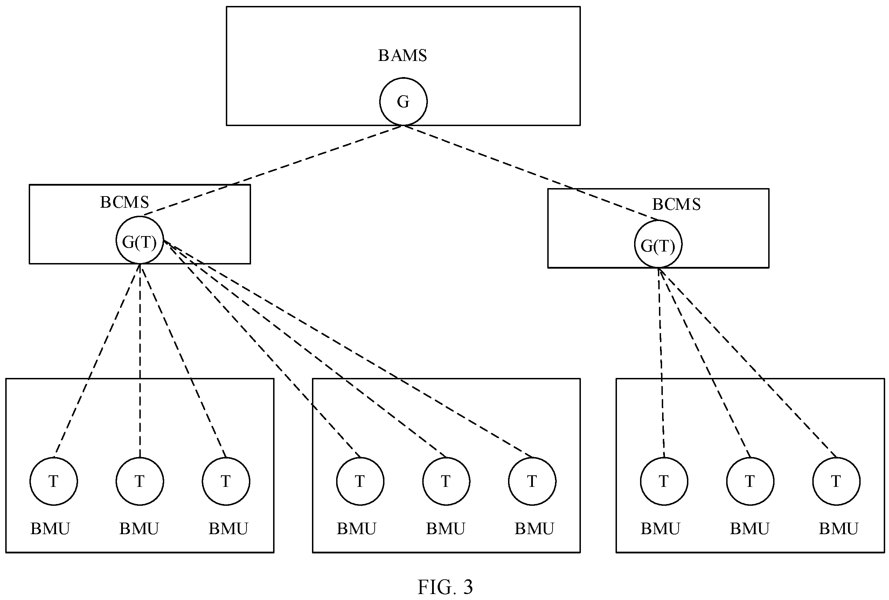

Optionally, the structure shown in FIG. 2 is applicable to an energy storage management scenario, an in-vehicle communication scenario, or the like, for example, a wireless battery management system (battery management system, BMS) scenario or a tire pressure detection scenario. For the wireless BMS scenario, refer to FIG. 3. In FIG. 3, a battery array management system (battery array management system, BAMS) serves as a root node, namely, a G1 node, or may be considered as a general management node, a battery cluster management system (battery cluster management system, BCMS) serves as a G(T) node, and a battery management unit (battery management unit, BMU) serves as a T node.

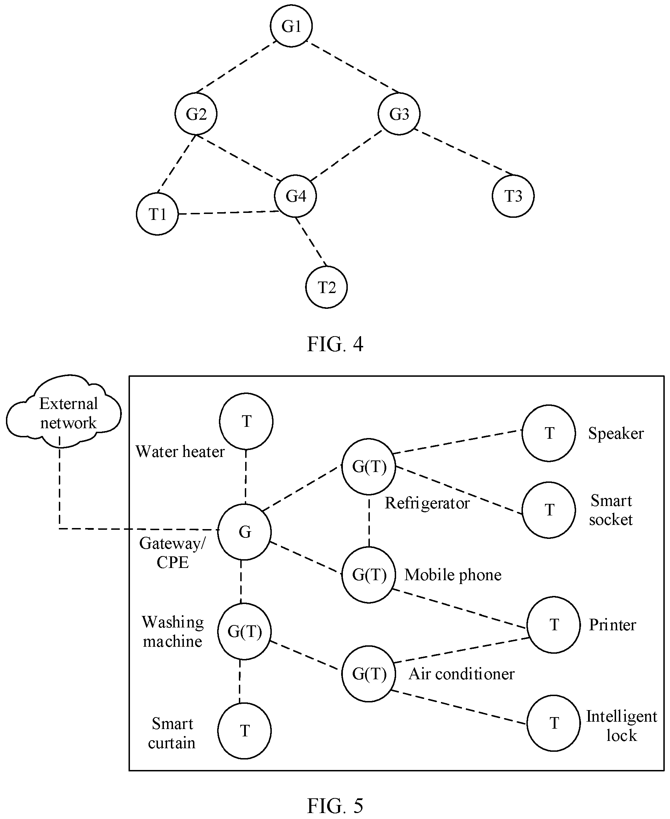

FIG. 4 is a diagram of a network domain in a mesh topology structure. The network domain shown in FIG. 4 includes a G1 node, a G2 node, a G3 node, a G4 node, a T1 node, a T2 node, and a T3 node. The G1 node may serve as a root node, or may be considered as a general management node, and the G2 node, the G3 node, the G4 node, the T1 node, the T2 node, and the T3 node serve as child nodes, or may be considered as managed nodes. The T1 node is connected to the G2 node, the T2 node is connected to the G4 node, the G4 node may be connected to the G2 node and the G3 node, the G2 node is connected to the G1 node, and the G3 node is connected to the G1 node. Optionally, in some cases, a T node may be connected to a plurality of G nodes. For example, the T1 node may be further connected to the G4 node. The G1 node may serve as a general management node, and the G2 node, the G3 node, and the G4 node may be G(T) nodes.

Optionally, the structure shown in FIG. 4 is applicable to a smart home scenario. FIG. 5 is a diagram of a smart home scenario. In FIG. 5, a gateway/customer-premises equipment (customer-premises equipment, CPE) serves as a general management node, an air conditioner, a mobile phone, a refrigerator, and a washing machine are nodes with dual identities, and an intelligent lock, a water heater, a speaker, a printer, a smart socket, and a smart curtain serve as T nodes. The foregoing explanations of the technical terms may be optionally used in the following embodiments.

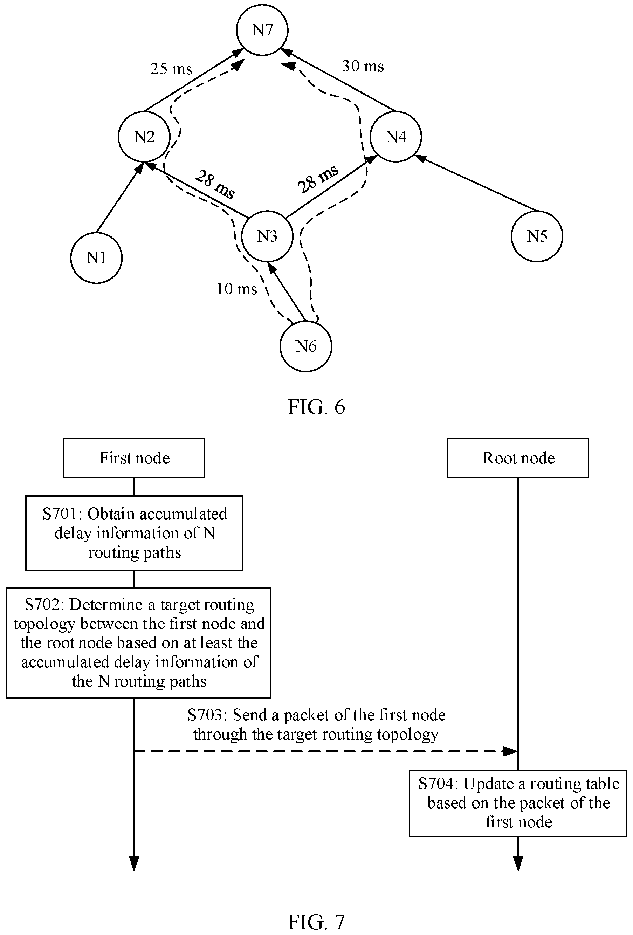

When nodes form a network, a node in the network may communicate with another node in the network in a connectionless or connection-oriented manner to transmit information. A channel for transmitting information between nodes may be referred to as a routing path. FIG. 6 is a diagram of a packet transmission routing path. A network domain includes a node N1 to a node N7. There are a plurality of possible designs for a connection relationship between the nodes and identities of the nodes. For details, refer to the foregoing related descriptions. Communication between the node N6 and the node N7 may be implemented through a path "N6-N3-N2-N7", and information is transferred between the node N6 and the node N7 through forwarding of intermediate nodes, namely, the node N2 and the node N3.

A larger quantity of nodes through which the routing path passes indicates a larger hop count of the routing path and a higher probability of delay instability. In the industry, packets are usually transmitted based on a plurality of different protocols through routing paths. In some solutions, a link-quality-based RPL is used to route and transmit a packet. The protocol specifies that a link metric value for constructing a tree topology route is a packet loss rate (ETX), namely, a ratio of a sent unicast data packet to a received acknowledgment frame. If the value is 1, it indicates that all unicast packets sent by a node are acknowledged by a peer node, indicating that the link is stable. A larger value indicates a less stable link and a higher risk of retransmission. However, this manner still has a specific limitation on a delay. For example, there is a scenario in which a packet loss rate is low but a delay is long. In addition, the packet loss rate cannot accurately reflect a link delay because packet sizes vary. In other words, the most stable link can indicate the minimum retransmission times, but cannot indicate the lowest delay. A size of a data packet has great impact on the packet loss rate. A large quantity of small packets reduce an expected packet loss rate, but cannot reduce the delay.

In some other solutions, a packet is forwarded through flooding in a mesh protocol. Therefore, information needs to be transmitted a plurality of times through a plurality of routing paths. However, flooding transmission is likely to cause a broadcast storm, which conflicts with communication and further increases a delay. As a result, it is difficult to ensure a low delay of end-to-end packet transmission in a network.

In view of this, embodiments of this application provide a communication method and a related apparatus. An end-to-end delay is used as a metric value for constructing a route. In other words, a metric for selecting a route by a child node is no longer a packet loss rate but a delay. This application can ensure end-to-end low-delay communication, and further ensure stability of information transmission.

The following describes methods provided in embodiments of this application.

FIG. 7 is a schematic flowchart of a communication method according to an embodiment of this application. Optionally, the method may be applied to a network domain, for example, one or more of the network domains in FIG. 1 to FIG. 6. The communication method shown in FIG. 7 may include step S701 and/or step S704. It should be understood that, for ease of description herein, a sequence of step S701 to step S704 is used for description, but this is not intended to limit execution necessarily in the foregoing sequence. An execution sequence, execution time, a quantity of execution times, and the like of the foregoing one or more steps are not limited in embodiments of this application. Step S701 to step S704 are specifically as follows:

**Step S701:** A first node obtains accumulated delay information of N routing paths.

The first node is an example name used to distinguish a specific node. For example, with reference to FIG. 6, the first node may be the node N1, the node N2, or another node.

A routing path is a channel for transmitting information between nodes, and the information may be transmitted from one node to another node along the routing path. Optionally, the information may be a packet, and the packet is transmitted by the first node to a root node along the routing path. The first node and the root node belong to a same network domain (for example, represented as a first network domain). For example, the first network domain includes the root node and one or more child nodes, and the first node belongs to the one or more child nodes. Optionally, there may be N routing paths for transmitting the packet of the first node, where N is an integer and N≥1. With reference to FIG. 6, an example in which the first node is the node N6 and the root node is the node N7 is used. A packet of the node N6 reaches the node N7 through two routing paths, where one routing path is node N6→node N3→node N2→node N7, and the other routing path is node N6→node N3→node N4→node N7.

Accumulated delay information indicates an accumulated delay of a routing path between nodes. With reference to FIG. 6, an example in which the first node is the node N6 and the root node is the node N7 is still used. Routing paths for a packet of the node N6 to reach the node N7 include a routing path (node N6→node N3→node N2→node N7) with an accumulated delay of 63 ms (10 ms+28 ms+25 ms) and a routing path (node N6→node N3→node N4→node N7) with an accumulated delay of 68 ms (10 ms+28 ms+30 ms).

Optionally, the accumulated delay information of the N routing paths may be sent by a neighboring node of the first node, or may be obtained by the first node through calculation. For example, the neighboring node of the first node may be a parent node of the first node.

Optionally, accumulated delay information of a first routing path indicates a delay of the packet of the first node reaching the root node through the first routing path, and the first routing path is any one of the N routing paths. In some solutions, the accumulated delay information of the first routing path is related to information about a delay between the first node and a first neighboring node of the first node, and the delay information indicates information about time used to transmit the packet of the first node between the first node and the first neighboring node of the first node. Optionally, the first neighboring node of the first node may be a previous-hop node of the first node. With reference to FIG. 6, an example in which the first node is the node N6 and the previous-hop node of the first node is the node N3 is still used. A distance between the node N6 and the node N3 is one hop, and information about a delay between the node N6 and the node N3 is 10 ms. In other words, the accumulated delay information of the first routing path is a sum of the information about the delay between the node N6 and the node N3 and information about a delay between other nodes on the first routing path.

In some other solutions, the accumulated delay information of the first routing path is related to information about a delay between a first neighboring node of the first node and a neighboring node of the first neighboring node of the first node, and the delay information indicates information about time used to transmit the packet of the first node between the first node and the first neighboring node and between the first node and the neighboring node of the first neighboring node. Optionally, the first neighboring node of the first node may be a previous-hop node of the first node, and the neighboring node of the first neighboring node of the first node may be a second previous hop node of the first node. With reference to FIG. 6, an example in which the first node is the node N6, the previous-hop node of the first node is the node N3, and the second previous hop node of the first node is the node N2 is still used. A distance between the node N6 and the node N3 is one hop, and a distance between the node N3 and the node N2 is one hop. That is, a distance between the node N6 and the node N2 is two hops. Information about a delay between the node N6 and the node N3 is 10 ms, and information about a delay between the node N3 and the node N2 is 28 ms. That is, information about a delay between the node N6 and the node N2 is 38 ms. In other words, the accumulated delay information of the first routing path is a sum of the information about the delay between the node N6 and the node N3, the information about the delay between the node N3 and the node N2, and information about a delay between other nodes on the first routing path.

**In a possible implementation,** the first node transmits a measurement signal to the first neighboring node of the first node.

The measurement signal is used to determine information about a delay between the first node and the first neighboring node of the first node.

For example, the measurement signal may be a second measurement signal. Optionally, the first node may receive the second measurement signal from the first neighboring node, and obtain the information about the delay between the first node and the first neighboring node based on the second measurement signal. Further, optionally, the second measurement signal may be a measurement request frame.

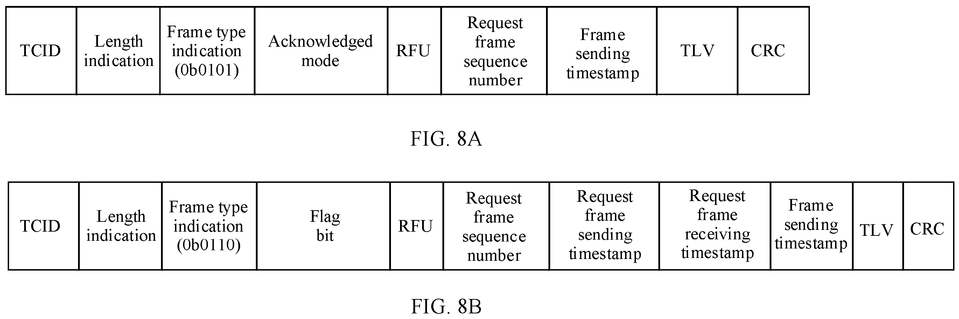

For example, a heartbeat packet between the first node and the first neighboring node of the first node carries a measurement frame, or a measurement frame is directly used as a heartbeat packet to maintain a link relationship. FIG. 8A and FIG. 8B are diagrams of a format of a measurement frame according to an embodiment of this application. As shown in FIG. 8A, a format of a measurement request frame may include one or more of the following information:
(1) Transmission channel identifier (TCID), which indicates an identifier of a transmission channel for transmitting data.
(2) Length indication, which indicates a length of a measurement request frame field.
(3) Frame type indication, which indicates a type of the measurement request frame. For example, the measurement request frame field is defined as 0b0101.
(4) Acknowledged mode, which indicates that a mode of a current measurement request frame is an acknowledged mode.
(5) Byte reserved for future use (Reserved For Future Use, RFU).
(6) Request frame sequence number, which indicates a sequence number of the measurement request frame.
(7) Frame sending timestamp, which indicates timestamp information when the measurement request frame is sent.
(8) TLV, which indicates a byte-stream-based data transmission mode. In an internet of things system, data received by a message receiver (for example, a server) is byte streams instead of character streams received by a user terminal. Therefore, the data may be encapsulated into bytes by using a TLV format. A data label "T" indicates a type of data, with a value range of 0 to 255. A data frame length "L" indicates a length of an entire data frame after the data is encapsulated. A data value "V" indicates a value of the transmitted data. Different types of data values have different characteristics, and the data values may be encapsulated and padded by byte based on an actual situation.
(9) Cyclic redundancy check (cyclic redundancy check, CRC), which is a group of check codes calculated based on data, and is used to check whether the data is changed or incorrectly transmitted during data transmission.

For example, the measurement signal may alternatively be a first measurement signal. Further, optionally, before receiving the second measurement signal from the first neighboring node, the first node may further send the first measurement signal to the first neighboring node, where the first measurement signal is used to trigger sending of the second measurement signal. Further, optionally, the first measurement signal may be a measurement response frame.

The first measurement signal is used to trigger the first neighboring node of the first node to send the second measurement signal to the first node, so that the first node receives the measurement signal from the first neighboring node (for example, a function of the second measurement signal may be to enable the first node to obtain a distance between the peer node and the first node). As shown in FIG. 8B, a format of the measurement response frame may include one or more of the following information:
(1) TCID, which indicates an identifier of a transmission channel for transmitting data.
(2) Length indication, which indicates a length of a measurement request frame field.
(3) Frame type indication, which indicates a type of the measurement request frame. For example, the measurement request frame field is defined as 0b0110.
(4) Flag bit, which indicates a running result. For example, the flag bit has eight bits, where a "0-bit" indicates that a TLV is not identified, a "1-bit" indicates that a value length defined by a length field in the TLV does not match an actual parameter value length, a "2-bit" indicates integrity of a measurement frame, and remaining bits are reserved bits.
(5) Byte reserved for future use (Reserved For Future Use, RFU).
(6) Request frame sequence number, which indicates a sequence number of the measurement request frame.
(7) Request frame sending timestamp, which indicates timestamp information when the measurement request frame is sent.
(8) Request frame receiving timestamp, which indicates timestamp information when the measurement request frame is received.
(9) Frame sending timestamp, which indicates timestamp information when the measurement response frame is sent.
(10) TLV, which indicates a byte-stream-based data transmission mode. In an internet of things system, data received by a message receiver (for example, a server) is byte streams instead of character streams received by a user terminal. Therefore, the data may be encapsulated into bytes by using a TLV format. A data label "T" indicates a type of data, with a value range of 0 to 255. A data frame length "L" indicates a length of an entire data frame after the data is encapsulated. A data value "V" indicates a value of the transmitted data. Different types of data values have different characteristics, and the data values may be encapsulated and padded by byte based on an actual situation.
(11) Cyclic redundancy check (cyclic redundancy check, CRC), which is a group of check codes calculated based on data, and is used to check whether the data is changed or incorrectly transmitted during data transmission.

**In a possible implementation,** the first node may determine the delay between the first node and the first neighboring node of the first node based on delay information in a first time period.

Optionally, the delay between the first node and the first neighboring node of the first node is an average value of delay information in the first time period. In other words, a delay between the first node and a neighboring node of the first node is usually not an instantaneous value obtained through a single measurement, but may be an average value in a past period of time.

**In another possible implementation,** the first time period includes at least one time slice. The first node may determine the delay between the first node and the first neighboring node of the first node based on delay information corresponding to the at least one time slice and a weight corresponding to the at least one time slice.

Optionally, a plurality of pieces of delay information are obtained in the first time period, and each piece of delay information corresponds to one time slice.

In the foregoing implementation, a delay of a routing path is usually an average value in a time period, but a link quality change cannot be well detected by using the average value. For example, link quality of a node is always stable in the past three days, and sufficient average samples are accumulated, so that when a link changes, route switching is extremely slow because a change in an average value is smoothed out by a large amount of historical data. In this application, a weighted average delay value is obtained by weighting an average delay value, so that delay reliability can be effectively ensured.

Optionally, each of the at least one time slice has a same length, or there are a plurality of time slices in the first time period, and there are at least two time slices with different duration in the plurality of time slices.

Optionally, there are the plurality of time slices in the first time period, and the plurality of time slices correspond to different weights.

Optionally, a time slice that is closer to current time in the at least one time slice corresponds to a higher weight.

For example, the delay that is between the first node and the first neighboring node of the first node and that is determined based on the delay information corresponding to the at least one time slice and the weight corresponding to the at least one time slice may satisfy the following formula: $ETX = {W}_{t 0} {M}_{t 0} + {W}_{t 1} {M}_{t 1} + {W}_{t 2} {M}_{t 2} + {W}_{t 3} {M}_{t 3} + ⋯ .$

ETX indicates the delay between the first node and the first neighboring node of the first node, W indicates time slice weight information, t indicates a time slice (which may also be referred to as a moment), and M indicates an average delay value obtained through calculation in a time slice (for example, 5 minutes).

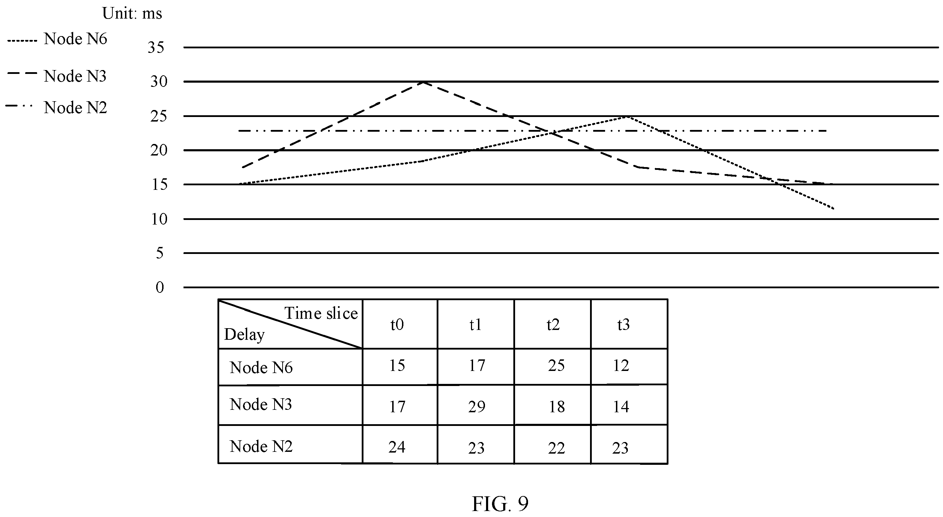

Optionally, the delay information corresponding to the at least one time slice and the weight corresponding to the at least one time slice may be carried in a packet delivered by the root node, or may be preconfigured. Further, optionally, the delay information corresponding to the at least one time slice and the weight corresponding to the at least one time slice may be associated with a service or an application scenario corresponding to a node. For example, in a smart home scenario, the delay information corresponding to the at least one time slice and the weight corresponding to the at least one time slice may be obtained by using a preconfigured table. FIG. 9 is a diagram of delays of different nodes in different time slices according to an embodiment of this application. A moment t0 indicates a time slice closest to a current time slice, t1 indicates a second closest time slice, a moment t2 indicates a time slice the third closest to the current time slice, and a moment t3 indicates a time slice the fourth closest to the current time slice. The same rule applies to subsequent moments. With reference to FIG. 5, for example, the first node is an air conditioner, the neighboring node of the first node is a washing machine, and a second node is a refrigerator. It is assumed that an average delay value of the air conditioner at a moment t0 is 24 ms, a weight value of the air conditioner at the moment t0 is 1.05, an average delay value of the air conditioner at a moment t1 is 23 ms, a weight value of the air conditioner at the moment t1 is 0.95, an average delay value of the air conditioner at a moment t2 is 22 ms, a weight value of the air conditioner at the moment t2 is 0.80, an average delay value of the air conditioner at a moment t3 is 23 ms, and a weight value of the air conditioner at the moment t3 is 0.60. In this case, it may be determined, based on average delay values corresponding to the air conditioner at moments t0 to t3 and weight values corresponding to the air conditioner at the moments t0 to t3, that a delay between the air conditioner and the root node (gateway/CPE) is 78.45 ms (24*1.05+23*0.95+22*0.80+23*0.60). A delay between the refrigerator and the gateway/CPE and a delay between the washing machine and the gateway/CPE may be obtained based on the foregoing calculation method. Details are not described herein again.

**In a possible implementation,** the first node receives a fifth packet from the root node.

The fifth packet includes one or more of length indication information of the first time period, time slice length indication information, time slice weight indication information, and the like. For ease of differentiation, the fifth packet may be represented as a packet M1.

Optionally, the length indication information of the first time period indicates a length of the first time period (for example, the first time period is 1 hour), the time slice length indication information indicates a length of each time slice in the first time period (for example, every 5 minutes within 1 hour is one time slice), and the time slice weight indication information indicates a weight corresponding to each time slice in the first time period.

**Step S702:** The first node determines a target routing topology between the first node and the root node based on at least the accumulated delay information of the N routing paths.

The target routing topology is at least one of the N routing paths. Optionally, when the target routing topology is one of the N routing paths, the target routing topology is an optimal routing path in the N routing paths. Further, optionally, when the target routing topology is at least one of the N routing paths, the target routing topology may be a plurality of preferred routing paths in the N routing paths. With reference to FIG. 6, an example in which the first node is the node N6 and the root node is the node N7 is still used. It is assumed that routing paths for a packet of the node N6 to reach the node N7 include a routing path (node N6→node N3→node N2→node N7) with an accumulated delay of 63 ms (10 ms+28 ms+25 ms) and a routing path (node N6→node N3→node N4→node N7) with an accumulated delay of 68 ms (10 ms+28 ms+30 ms). The target routing topology may be the routing path with the accumulated delay of 63 ms in the two routing paths, or the two routing paths each may be used as the target routing topology.

Accumulated delay information corresponding to the target routing topology satisfies a first condition. For example, the first condition may be that a delay in the accumulated delay information corresponding to the target routing topology is the shortest, or may be that delays in the accumulated delay information corresponding to the target routing topology are sorted in ascending order, and first M delays that are close to the shortest delay are selected, where M is a positive integer and M≥2. Correspondingly, the target routing topology between the first node and the root node may be a routing path with a shortest delay in the accumulated delay information in the N routing paths, or a routing path with first M delays that are closest to the shortest delay in the N routing paths.

**In a possible implementation,** the first node sends a second packet to the first neighboring node of the first node (with reference to FIG. 6, the first node may be N3, and the first neighboring node of the first node may be the node N6). The accumulated delay information of the target routing topology between the first node and the root node may be carried in the packet and broadcast. The second packet is denoted as a packet M2 for ease of differentiation. Optionally, the packet M2 includes the accumulated delay information of the target routing topology between the first node and the root node. Optionally, the first neighboring node of the first node is connected to the first node in a point-to-point manner.

When nodes form a network, the nodes in the network perform network communication in a connectionless or connection-oriented manner. In some cases, connection-oriented means that two nodes in the network establish a point-to-point connection. In this case, a message may be sent through point-to-point communication. In this application, an accumulated delay of each hop may be carried in the packet of the first node and broadcast for the neighboring node of the first node to select a route. For example, with reference to FIG. 6, if a distance between the node N6 and the node N3 is one hop, the node N6 is connected to the node N3 in a point-to-point manner.

Further, optionally, the accumulated delay information of the target routing topology between the first node and the root node may be carried in a RANK field of the packet M2 and broadcast.

In some solutions, the packet M2 may carry a part or all of the accumulated delay information. For example, the packet M2 may carry information about a data packet delay, and/or carry information about a data packet jitter. For another example, the packet M2 may include one or more of a data packet delay, a data packet jitter, a jitter delay of the neighboring node of the first node, and the like.

The following describes, by using examples, two implementations of obtaining the accumulated delay information of the N routing paths when the first node is different nodes.

**Implementation 1:** The first node is a root node, the first node is connected to the root node in a point-to-point manner, and the first node determines information about a delay between the first node and the root node, where accumulated delay information of a second routing path is the information about the delay between the first node and the root node, and the second routing path is one of the N routing paths. For example, with reference to FIG. 6, when N=1, there is one routing path in the first network domain. It is assumed that the first node is the node N7 (overlaps with the root node), and the node N7 determines that accumulated delay information of the second routing path passing through the node N7 is 0 ms.

**Implementation 2:** The first node is a child node, the first node obtains accumulated delay information of a target routing topology between the first neighboring node of the first node and the root node, and the first neighboring node of the first node is connected to the first node in a point-to-point manner. The first node may determine the information about the delay between the first node and the first neighboring node of the first node, and determine accumulated delay information of a second routing path based on the information about the delay between the first node and the first neighboring node of the first node and the accumulated delay information of the target routing topology between the first neighboring node of the first node and the root node, where the second routing path is one of the N routing paths, and the second routing path passes through the first neighboring node of the first node.

For example, with reference to FIG. 6, when N=2, it is assumed that the first node is the node N6, the first neighboring node of the first node is the node N3, the root node is the node N7, and the second routing path is node N6→node N3→node N2→node N7. The node N6 obtains accumulated delay information of a target routing topology between the node N3 and the node N7, and the node N3 is connected to the node N6 in a point-to-point manner. The node N6 obtains, based on a target delay of the node N3 and a delay between the node N3 and the node N6, accumulated delay information of a packet of the node N6 reaching the node N7 through a routing path of node N6→node N3→node N2→node N7.

**In a possible implementation,** the first node receives a third packet from the first neighboring node of the first node (with reference to FIG. 6, for example, the first node is the node N3, and the first neighboring node of the first node is the node N2). The accumulated delay information of the target routing topology between the first node and the root node may be carried in the third packet and broadcast. The third packet is denoted as a packet M3 for ease of differentiation.

**In a possible implementation,** the first node broadcasts a fourth packet.

The fourth packet includes timestamp information, the timestamp information is used by a second neighboring node of the first node to determine the target routing topology, and the timestamp information may be carried in the fourth packet and broadcast by the first node. The packet is denoted as a packet M4 for ease of differentiation.

For example, the first node may broadcast the packet M4 to all neighboring nodes. A function of a timestamp is to update the information about the delay between the first node and the neighboring node of the first node (the delay is obtained based on a difference between a packet timestamp and a receiving moment). For example, if a delay of an original parent node becomes longer, a link of an original parent node is interrupted, or a delay of a neighboring node becomes shorter (that is, a lower delay occurs on the neighboring node), the routing path is switched. Optionally, the second neighboring node may be a child node (namely, a lower-level node) of the first node in the first network domain, or may be a parent node (namely, an upper-level node) of the first node or a sibling node (namely, a same-level node) at a same layer.

**In a possible implementation,** the first node may further obtain a hop count of the N routing paths. A hop count constraint is that the hop count satisfies a second condition, and the hop count is associated with a quantity of forwarding hops of the packet of the first node reaching the root node.

The second condition may be that a hop count of each of the N routing paths is less than or is less than or equal to a preset value, and the preset value may be, for example, two hops. For example, a constraint condition that a hop count between the first node and the root node needs to satisfy may be that a maximum hop count between the first node and the root node is limited to 2. A definition of the hop count constraint is merely an example for description, and may alternatively be another possible definition. This is not limited in this application.

Optionally, the hop count of each routing path is equal to the quantity of forwarding hops of the packet of the first node reaching the root node, or the hop count of each routing path is equal to the quantity of forwarding hops plus 1.

For example, from a perspective of a forwarding side (for example, a one-hop node forwards a packet from a two-hop node to the root node), in this case, a hop count of each routing path is equal to the quantity of forwarding hops of the packet of the first node reaching the root node (for example, the quantity of forwarding hops is 1, and the hop count is also 1). From a perspective of end-to-end reporting (for example, a two-hop node reports a packet to the root node), in this case, a hop count of each routing path is equal to the quantity of forwarding hops of the packet of the first node reaching the root node plus 1 (for example, the quantity of forwarding hops is 1, and the hop count is 2).

Optionally, when there are routing paths that satisfy a hop count constraint in the N routing paths, the target routing topology is a routing path that satisfies the hop count constraint and that is with a smallest hop count in the N routing paths.

A larger hop count indicates a less stable delay, because each hop of the routing path may cause flapping, resulting in delay accumulation, and further resulting in an unstable route. Therefore, in a same communication environment in which a hop count is considered, a routing path with a smaller hop count is more stable. For example, it is assumed that the hop count constraint is three hops. If there is a two-hop routing path and a three-hop routing path in routing paths from the first node to the root node in the first network domain, both the two routing paths are routing paths that satisfy the hop count constraint. However, compared with transmitting a packet through the three-hop routing path, transmitting the packet through the two-hop routing path has higher delay stability. Based on this, a routing path with a smaller hop count (the two-hop routing path) may be selected from the two routing paths as the target routing topology, to ensure network stability during packet transmission.

**In a possible implementation,** the first node determines the target routing topology between the first node and the root node based on the accumulated delay information of the N routing paths and the hop count of the N routing paths.

A larger hop count indicates a less stable delay, because each hop of the routing path may cause flapping, resulting in delay accumulation, and further resulting in an unstable route. However, a smaller hop count does not necessarily indicate a stable delay. Therefore, during route construction, evaluation may be performed based on accumulated delay information of a routing path, a hop count of the routing path, and a followed rule of a hop count constraint. The path with the shortest delay is selected when the hop count constraint is satisfied, so that a delay of the routing path can be reduced and the delay can be more stable.

**The foregoing describes specific content of the accumulated delay information, the hop count, and the target routing topology by using examples. The following lists two implementations of determining the target routing topology between the first node and the root node based on the accumulated delay information and the hop count of the N routing paths.**

**Implementation 1:** When there are a plurality of routing paths that satisfy a hop count constraint in the N routing paths, the target routing topology is a routing path that satisfies the hop count constraint and that is with a shortest delay in the N routing paths.

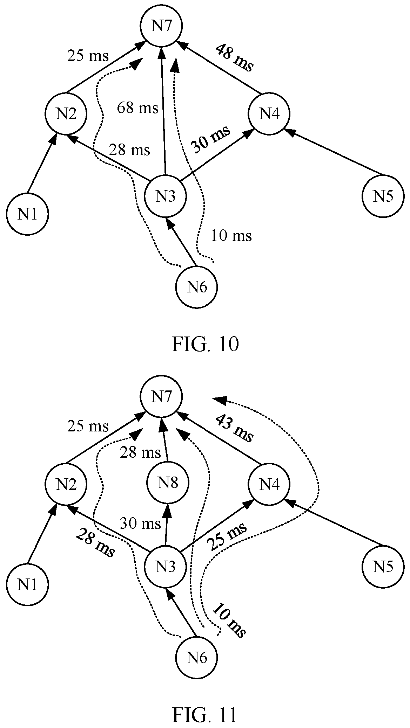

For example, FIG. 10 is a diagram of a target routing topology according to an embodiment of this application. An example in which the first node is a node N6 and the root node is a node N7 is used. It is assumed that a hop count constraint is three hops, and routing paths for a packet of the node N6 to reach the node N7 include a three-hop routing path (node N6→node N3→node N2→node N7) with a delay of 63 ms (25 ms+28 ms+10 ms), a two-hop routing path (node N6→node N3→node N7) with a delay of 78 ms (10 ms+68 ms), and a three-hop routing path (node N6→node N3→node N4→node N7) with a delay of 88 ms (10 ms+30 ms+48 ms). Because all the three routing paths satisfy the hop count constraint, the node N6 may select the routing path with the shortest delay (63 ms) in the three routing paths as the target routing topology.

**Implementation 2:** When there is no routing path that satisfies the hop count constraint in the N routing paths, the target routing topology is a routing path with a shortest delay in the N routing paths.

For example, FIG. 11 is a diagram of another target routing topology according to an embodiment of this application. An example in which the first node is a node N6 and the root node is a node N7 is used. It is assumed that a hop count constraint is two hops, and routing paths for a packet of the node N6 to reach the root node include a three-hop routing path (node N6→node N3→node N2→node N7) with an accumulated delay of 63 ms (25 ms+28 ms+10 ms), a three-hop routing path (node N6→node N3→node N8→node N7) with an accumulated delay of 68 ms (28 ms+30 ms+10 ms), and a three-hop routing path (node N6→node N3→node N4→node N7) with an accumulated delay of 78 ms (43 ms+25 ms+10 ms). Because there is no routing path that satisfies the hop count constraint in the foregoing three three-hop routing paths, to ensure delay stability as much as possible, the node N6 may select the routing path with the shortest accumulated delay (63 ms) in the three three-hop routing paths as the target routing topology.

Optionally, when N≥2, the target routing topology is a routing path with a smallest hop count in the N routing paths. When there are at least two routing paths with a smallest hop count in the N paths, the target routing topology is a routing path with a shortest delay in the at least two routing paths with the smallest hop count.

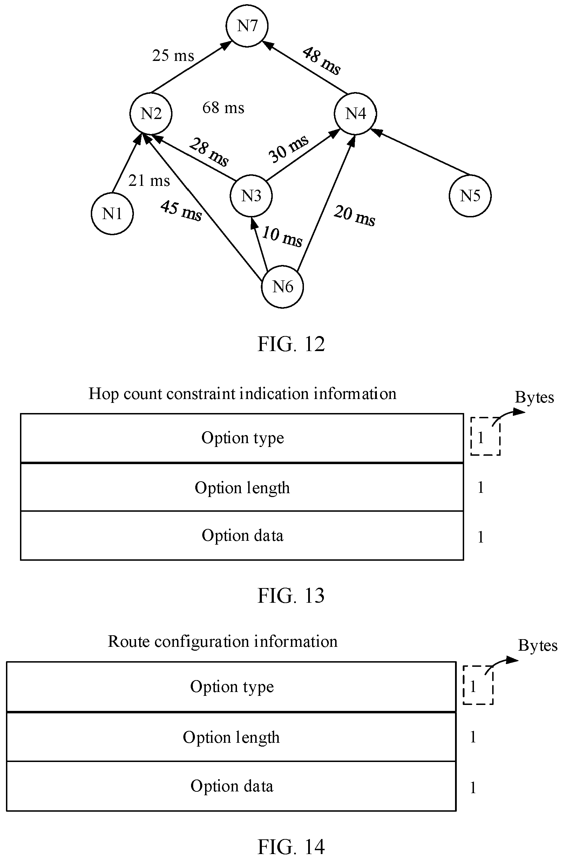

In this solution, an implementation in which the rule of the hop count constraint is not followed and only the routing path with the smallest hop count and the shortest delay in the N routing paths is considered is provided. For example, FIG. 12 is a diagram of still another target routing topology according to an embodiment of this application. An example in which the first node is a node N6 and the root node is a node N7 is used. Routing paths for a packet of the node N6 to reach the node N7 include a two-hop routing path with an accumulated delay of 70 ms (25 ms+45 ms), a two-hop routing path with an accumulated delay of 68 ms (48 ms+20 ms), a three-hop routing path with an accumulated delay of 63 ms (25 ms+28 ms+10 ms), and a three-hop routing path with an accumulated delay of 88 ms (48 ms+30 ms+10 ms). The two two-hop routing paths with accumulated delays of 70 ms and 68 ms respectively are routing paths with the smallest hop count in the foregoing four routing paths. Because both the foregoing two two-hop routing paths are routing paths with the smallest hop count, a routing path with a shorter accumulated delay (namely, the two-hop routing path with the accumulated delay of 68 ms) may be selected from the two routing paths as the target routing topology, to ensure network stability during packet transmission.

With reference to the foregoing implementation, in this application, evaluation is performed based on a hop count and accumulated delay information of a routing path, and the rule of the hop count constraint, to obtain the target routing topology, so that reliability of an end-to-end delay can be ensured.

Optionally, the first node may send hop count alarm information to the root node when a hop count of the target routing topology does not satisfy the hop count constraint.

**In a possible implementation,** the first node broadcasts a first packet (with reference to FIG. 12, the first node may be N3, and the first neighboring node of the first node may be a node N6). Hop count constraint indication information of the first network domain may be carried in the packet and broadcast. The hop count constraint indication information indicates the constraint condition that the hop count between the second node and the root node needs to satisfy. In other words, the hop count constraint indication information indicates that the hop count from each node that expects to join the first network domain to the root node should not exceed the hop count constraint. The second node is a node other than the first node in the first network domain. The packet is denoted as a packet M5 for ease of differentiation.

Optionally, the hop count constraint indication information of the first network domain may be carried in an option (option) field of the packet M5 and broadcast. Further, optionally, the hop count constraint indication information of the first network domain may be carried in an option (option) field of the first packet and broadcast by the root node. Further, optionally, the hop count constraint indication information is carried in the packet M5 and broadcast by child nodes at each layer.

Optionally, the option field includes a TLV. FIG. 13 is a diagram of a format of a packet M5 according to an embodiment of this application. The packet M5 may include one or more of the following information:
(1) Option type (option type), which indicates a type of the hop count constraint. For example, an option type field is one byte, and the option type field is defined as 0x80.
(2) Option length (option length), which indicates a size of an option data field. For example, an option length field is one byte, and a value of the option length field is 1.
(3) Option data (option data), which indicates a value of the hop count constraint. For example, a value range of the option data field is 1 to 255, and a length of the option data field is one byte.

**In a possible implementation,** the first node may receive a query packet from the root node, where the query packet is used to query for route configuration information of the first node; and feed back the route configuration information of the first node to the root node. The query packet is denoted as a packet M6 for ease of differentiation.

Optionally, the route configuration information includes one or more of time slice length information of the first node, time slice weight information of the first node, the hop count constraint indication information of the first network domain, and the like.

Optionally, the route configuration information of the first node may be carried in an option field of the packet M6 and broadcast. Further, optionally, the route configuration information of the first node may be carried in an option field of the packet M6 and broadcast by the root node. Further, optionally, the route configuration information of the first node is carried in the packet M6 and broadcast by child nodes at each layer.

Optionally, the option field includes a TLV. FIG. 14 is a diagram of a format of a packet M6 according to an embodiment of this application. The route configuration information in the packet M6 may include one or more of the following information:
(1) Option type, which indicates a type of the route configuration information. For example, an option type field is one byte, and the option type field is defined as 0xC0.
(2) Option length, which indicates a size of an option data field. For example, an option length field is one byte, and a value of the option length field is 1.
(3) Option data, which indicates that the queried route configuration information includes one or more of time slice length information of the first node, time slice weight information of the first node, the hop count constraint indication information of the first network domain, and the like. For example, the option data field is one byte. 0x80 indicates the hop count constraint indication information of the first network domain, 0x81 indicates the time slice weight information of the first node, and 0x82 indicates the time slice length information of the first node.

Optionally, the time slice weight information (for example, represented as w) of the first node may be carried in an option field of the packet M6 and broadcast. Further, optionally, the time slice weight information of the first node may be carried in an option field of the packet M6 and broadcast by the root node. Further, optionally, the time slice weight information of the first node is carried in the packet M6 and broadcast by child nodes at each layer.

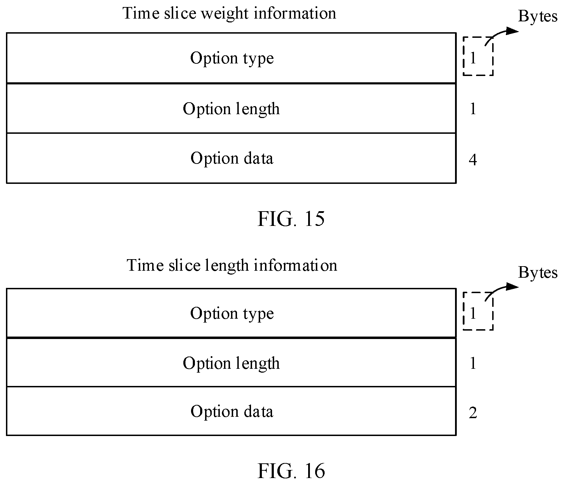

Optionally, the option field includes a TLV. FIG. 15 is a diagram of a format of another packet M6 according to an embodiment of this application. The time slice weight information w in the packet M6 may include one or more of the following information:
(1) Option type, which indicates a type of a weight corresponding to a time slice. For example, an option type field is one byte, and the option type field is defined as 0x81.
(2) Option length, which indicates a size of an option data field. For example, an option length field is one byte, and a value of the option length field is 4.
(3) Option data, which indicates a value of the weight corresponding to the time slice. For example, a value range of the option data field is a floating-point decimal, and the option data field is four bytes.

Optionally, the time slice length information (for example, represented as t) of the first node may be carried in an option field of the packet M6 and broadcast. Further, optionally, the time slice length information of the first node may be carried in an option field of the packet M6 and broadcast by the root node. Further, optionally, the time slice length information of the first node is carried in the packet M6 and broadcast by child nodes at each layer.

Optionally, the option field includes a TLV. FIG. 16 is a diagram of a format of still another packet M6 according to an embodiment of this application. The time slice length information t in the packet may include one or more of the following information:
(1) Option type, which indicates a type of a time slice. For example, an option type field is one byte, and the option type field is defined as 0x82.
(2) Option length, which indicates a size of an option data field. For example, a unit of a time slice t is millisecond (ms), an option length field is one byte, and a value of the option length field is 2.
(3) Option data, which indicates a value of the time slice. For example, the option data field is two bytes.

Optionally, the query packet may include one or more of the first packet, the second packet, the third packet, the fourth packet, the fifth packet, and the like described in the foregoing embodiments. This is not limited in this application.

Optionally, the first node updates accumulated delay information of at least one of the N routing paths, and determines the target routing topology between the first node and the root node based on updated accumulated delay information of the N routing paths.

For example, a special topology hop count may be constructed by using a signal attenuator, or a delay between nodes may be increased by using a signal jammer, and a time interval of route switching is sensed by updating accumulated delay information of a routing path, to ensure stability of the target routing topology between the first node and the root node.

Further, the first node may send the packet to the root node through the determined target routing topology. The following provides descriptions with reference to step S803.

**Step S703:** The first node sends the packet of the first node to the root node through the target routing topology.

Correspondingly, the root node receives the packet of the first node from the first node. Optionally, the packet of the first node received by the root node may be forwarded by the second node. The target routing topology passes through the second node, and the second node is a neighboring node of the root node.

**Because specific content of information that may be carried in the packet is described by using an example in step S702, the following lists two possible implementations of sending the packet.**

**Implementation 1:** The first node sends one packet to the root node. For example, when there is only one target routing topology, the first node sends the packet of the first node to the root node through the target routing topology.

Correspondingly, the root node receives the packet from the first node. Optionally, the packet received by the root node from the first node may be forwarded by the second node.

**Implementation 2:** The first node sends a plurality of packets to the root node. For example, when there are M target routing topologies, the first node sends M packets to the root node through the M target routing topologies, where M is an integer and M≥2. The target routing topology corresponds to M of the N routing paths, where N is an integer and N≥2. The first node sends M packets of the first node to the root node through the M routing paths, where each of the M packets is correspondingly sent through each of the M routing paths.

Correspondingly, the root node receives the M packets of the first node from the first node. Optionally, the packet received by the root node from the first node may be forwarded by a plurality of neighboring nodes of the root node.

For example, in some deterministic delay scenarios (for example, residential energy alarm data needs to be reported to the root node within 100 ms), the first node may simultaneously send a plurality of pieces of same packet data to a primary parent node and a secondary parent node based on a feature of a plurality of parent nodes in a routing protocol. In this way, packets may be transmitted on different links, and it can be ensured that other packets are not affected even if an abnormality occurs on a link. This enhances robustness and reduces a delay caused by retransmission due to a packet loss. After receiving the plurality of packets, the root node may select, based on a packet sequence number at an application layer, to discard a duplicate packet (that is, perform a deduplication operation) and retain a packet that satisfies a requirement of the root node.

Optionally, a multi-fed and selective receiving feature is triggered only by a source node. In other words, only the source node sends redundant packets to the parent node and the secondary parent node. A relay node does not trigger multi-fed and selective receiving again during forwarding, to prevent a forwarding storm.

Optionally, the packet from the first node may include one or more of the first packet, the second packet, the third packet, the fourth packet, the fifth packet, and the like described in steps S701 to S703. This is not limited in this application. For detailed explanations of the first packet, the second packet, the third packet, the fourth packet, the fifth packet, and the like, refer to the embodiment described in steps S701 to S703. Details are not described herein again.

**Step S704:** The root node updates a routing table based on the packet of the first node.

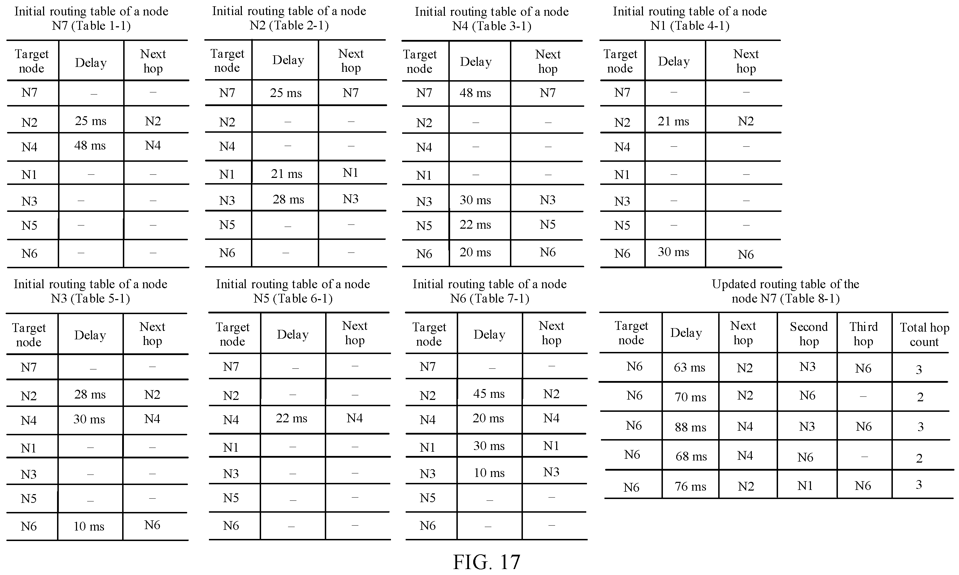

The routing table indicates that a next-hop node of the target routing topology passing through the first node is the second node. For example, FIG. 17 is a diagram of a routing table according to an embodiment of this application. With reference to FIG. 12, each initial routing table records a routing table of information about a delay between each node and a neighboring node of each node. As shown in Table 1-1 in FIG. 17, an example in which a next hop of a root node (for example, a node N7) is a node N2 or a node N4 is used. Information about a delay from the node N7 to the node N2 is 25 ms, and information about a delay from the node N7 to the node N4 is 48 ms. Information about these nodes may be separately recorded in a routing table of the root node. After the root node summarizes the information about the plurality of nodes, an updated routing table shown in Table 8-1 in FIG. 17 may be formed. That is, the root node may update routing information based on the information about the delay between each node and the neighboring node of the node.

In this application, all the N routing paths can support transmission of the packet of the first node to the root node, and each routing path has corresponding accumulated delay information. Accumulated delay information of a routing path from a node A to a node B refers to a delay (or referred to as an end-to-end delay) of packet transmission between the node A and the node B.

A shorter delay in transmitting a packet between nodes in a network domain indicates higher stability in transmitting a packet through a routing topology with a shorter delay. Therefore, in this application, a target routing topology for transmitting a packet between nodes in a same network domain is selected based on the accumulated delay information of the N routing paths, so that a low-delay packet transmission routing path can be coordinated between the nodes. Optionally, the target routing topology may be a routing path with a shortest delay. Transmitting a packet of a node through the target routing topology can ensure reliability of an end-to-end delay.

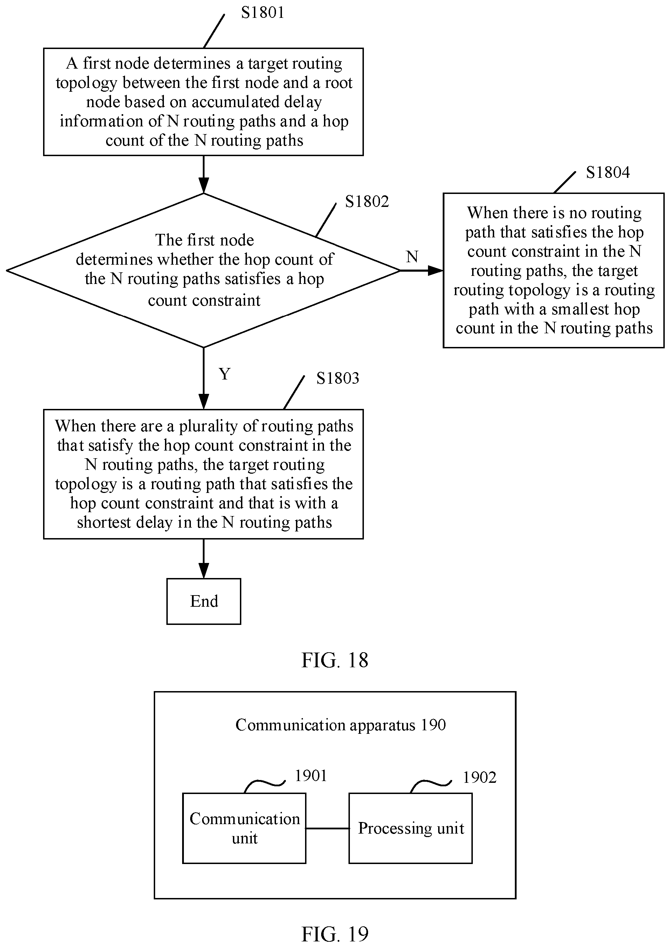

FIG. 7 describes a procedure of the communication method from a perspective of system interaction, and provides a plurality of optional solutions. The following describes a possible implementation by using an example with reference to FIG. 18.

FIG. 18 is a schematic flowchart of another communication method according to an embodiment of this application. Optionally, the communication method may be applied to the foregoing communication system, for example, one or more of the communication systems in FIG. 1 to FIG. 6.

The communication method includes one or more steps in step S1801 to step S1804. It should be understood that, for ease of description herein, a sequence of step S1801 to step S1804 is used for description, but this is not intended to limit execution necessarily in the foregoing sequence. An execution sequence, execution time, a quantity of execution times, and the like of the foregoing one or more steps are not limited in embodiments of this application. Another step may alternatively be interpolated between, before or after these steps as required. Step S1801 to step S1804 are specifically as follows:
**Step S1801:** A first node determines a target routing topology between the first node and a root node based on accumulated delay information of N routing paths and a hop count of the N routing paths.

Optionally, the first node is an example name used to distinguish a specific node. For example, with reference to FIG. 6, the first node may be the foregoing node N1, node N2, or another node. Accumulated delay information indicates a delay accumulated in a process of transmitting a packet between nodes. A hop count constraint is that a hop count satisfies a second condition, and the hop count is associated with a quantity of forwarding hops of a packet of the first node reaching the root node. The target routing topology is at least one of the N routing paths, and accumulated delay information corresponding to the target routing topology satisfies a first condition. For detailed descriptions of the foregoing content, refer to embodiments of FIG. 6, FIG. 7, and the like.

**Step S1802:** The first node determines whether the hop count of the N routing paths satisfies the hop count constraint.

For example, determining whether the hop count of the N routing paths satisfies the hop count constraint may be determining whether a hop count of each of the N routing paths is less than or is less than or equal to a preset value (for example, the preset value may be two hops).

**Step S1803:** When there are a plurality of routing paths that satisfy the hop count constraint in the N routing paths, the target routing topology is a routing path that satisfies the hop count constraint and that is with a shortest delay in the N routing paths.

For example, when the plurality of routing paths satisfies the hop count constraint, the first node may select a neighboring node with a shortest delay as a parent node, so that the target routing topology may be a routing path that satisfies the hop count constraint and that is with a shortest delay in the N routing paths.

**Step S1804:** When there is no routing path that satisfies the hop count constraint in the N routing paths, the target routing topology is a routing path with a smallest hop count in the N routing paths.

For example, when there is no routing path that satisfies the hop count constraint in the N routing paths, the first node may determine whether the first node currently has only one neighboring node. If there are a plurality of neighboring nodes, the first node selects a neighboring node with a smallest hop count as a parent node (for example, with reference to FIG. 9, the first node is a node N3, the node N3 has three neighboring nodes: a node N2, a node N4, and a node N7, and the node N3 may select the node N7 with a smallest hop count as a parent node of the node N3), so that the target routing topology may be a routing path with a smallest hop count in the N routing paths.

Optionally, when there is no routing path that satisfies the hop count constraint in the N routing paths, the first node may determine whether the first node currently has only one neighboring node. If there is only one neighboring node, the first node selects the only neighboring node as a parent node (for example, with reference to FIG. 9, the first node is a node N1, the node N1 has only one neighboring node, namely, a node N2, and therefore, the node N2 may be selected as a parent node of the node N1), so that the target routing topology may be a routing path that passes through the neighboring node in the N routing paths. It should be noted that for detailed explanations of steps S1801 to S1804, refer to the embodiment shown in FIG. 7. Details are not described herein again.

The foregoing describes in detail the methods in embodiments of this application. The following provides apparatuses in embodiments of this application.

It should be understood that division into units in the apparatuses provided in embodiments of this application is merely logical function division. During actual implementation, all or a part of the units may be integrated into one physical entity, or may be physically separated. In addition, a unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. The processor is, for example, a general-purpose processor like a central processing unit (central processing unit, CPU) or a microprocessor, and the memory is a memory inside the apparatus or a memory outside the apparatus.

Alternatively, a unit in the apparatus may be implemented in a form of hardware circuit, and the hardware circuit may be designed to implement functions of a part or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement functions of a part or all of the units. For another example, in another implementation, the hardware circuit may be implemented by using a programmable logic device (programmable logic device, PLD). A field programmable gate array (Field Programmable Gate Array, FPGA) is used as an example. The hardware circuit may include a large quantity of logic gate circuits, and a connection relationship between the logic gate circuits is configured based on a configuration file, to implement functions of a part or all of the units.

In embodiments of this application, the units in the apparatus may be configured as one or more processors (or processing circuits) that implement the foregoing methods, for example, a CPU, a graphics processing unit (GPU), a neural network processing unit (neural network processing Unit, NPU), a tensor processing unit (tensor processing unit, TPU), a deep learning processing unit (deep learning processing unit, DPU), a microprocessor (microprocessor unit, MPU), a digital signal processor (digital signal processor, DSP), an ASIC, an FPGA, or a combination of at least two of these processor forms.

In addition, all or a part of the units of the foregoing apparatus may be integrated, or may be implemented independently. In an implementation, these units are integrated together, and implemented in a form of system-on-a-chip (system-on-a-chip, SOC, or referred to as a system on chip). The SOC may include at least one processor, configured to implement any one of the foregoing methods or implement functions of units in the apparatus. Types of the at least one processor may be different. For example, the at least one processor includes a CPU and an FPGA, a CPU and an artificial intelligence processor, or a CPU and a GPU. The following lists several possible apparatuses.

FIG. 19 is a diagram of a structure of a communication apparatus 190 according to an embodiment of this application. Optionally, the communication apparatus 190 may be an independent device, for example, a node. Alternatively, the communication apparatus 190 may be a component, for example, a chip or an integrated circuit, in an independent device (for example, a node). The communication apparatus 190 is configured to implement the foregoing communication method, for example, the communication method shown in FIG. 8A and FIG. 8B or FIG. 18.

In a possible design, the communication apparatus 190 includes a communication unit 1901 and a processing unit 1902. The communication apparatus 190 is configured to implement the foregoing communication method, for example, the communication method shown in FIG. 8A and FIG. 8B or FIG. 18. For example, the communication apparatus is configured to perform a method performed by a first node, a first neighboring node of the first node, a second neighboring node of the first node, or the like.

In a possible implementation, the communication unit 1901 is configured to obtain accumulated delay information of N routing paths, where accumulated delay information of a first routing path indicates a delay of a packet of the first node reaching a root node through the first routing path, the first routing path is any one of the N routing paths, N is an integer and N≥1, and the first node and the root node belong to a first network domain. The processing unit 1902 is configured to determine a target routing topology between the first node and the root node based on at least the accumulated delay information of the N routing paths, where the target routing topology is at least one of the N routing paths, and accumulated delay information corresponding to the target routing topology satisfies a first condition. In another possible implementation, the communication unit 1901 is further configured to obtain a hop count of the N routing paths. In terms of determining the target routing topology between the first node and the root node based on at least the accumulated delay information of the N routing paths, the processing unit 1902 is specifically configured to determine the target routing topology between the first node and the root node based on the accumulated delay information of the N routing paths and the hop count of the N routing paths.

In another possible implementation, when there are routing paths that satisfy a hop count constraint in the N routing paths, the target routing topology is a routing path that satisfies the hop count constraint and that is with a smallest hop count in the N routing paths.

In another possible implementation, when there are a plurality of routing paths that satisfy a hop count constraint in the N routing paths, the target routing topology is a routing path that satisfies the hop count constraint and that is with a shortest delay in the N routing paths. Alternatively, when there is no routing path that satisfies the hop count constraint in the N routing paths, the target routing topology is a routing path with a shortest delay in the N routing paths.

In another possible implementation, the hop count constraint is that the hop count satisfies a second condition, and the hop count is associated with a quantity of forwarding hops of the packet of the first node reaching the root node. Optionally, a hop count of each routing path is equal to the quantity of forwarding hops of the packet of the first node reaching the root node, or a hop count of each routing path is equal to the quantity of forwarding hops plus 1.

In another possible implementation, the communication unit 1901 is further configured to send hop count alarm information to the root node when a hop count of the target routing topology does not satisfy the hop count constraint.

In another possible implementation, the communication unit 1901 is further configured to broadcast a first packet, where the first packet includes hop count constraint indication information of the first network domain. The hop count constraint indication information indicates a constraint condition that a hop count between a second node and the root node needs to satisfy, and the second node is a node other than the first node in the first network domain.

In another possible implementation, N≥2, and an optimal target routing topology is a routing path with a smallest hop count in the N routing paths. When there are at least two routing paths with a smallest hop count in the N paths, the target routing topology is a routing path with a shortest delay in the at least two routing paths with the smallest hop count.

In another possible implementation, the communication unit 1901 is further configured to send a second packet to a first neighboring node of the first node, where the second packet includes the accumulated delay information of the target routing topology between the first node and the root node, and the first neighboring node of the first node is connected to the first node in a point-to-point manner.

In another possible implementation, the first node is connected to the root node in a point-to-point manner, and in terms of obtaining the accumulated delay information of the N routing paths, the communication unit 1901 is specifically configured to determine information about a delay between the first node and the root node, where accumulated delay information of a second routing path is the information about the delay between the first node and the root node, and the second routing path is one of the N routing paths.

In another possible implementation, in terms of obtaining the accumulated delay information of the N routing paths, the communication unit 1901 is specifically configured to: obtain accumulated delay information of a target routing topology between the first neighboring node of the first node and the root node, where the first neighboring node of the first node is connected to the first node in the point-to-point manner; determine information about a delay between the first node and the first neighboring node of the first node; and determine accumulated delay information of a second routing path based on the information about the delay between the first node and the first neighboring node of the first node and the accumulated delay information of the target routing topology between the first neighboring node of the first node and the root node, where the second routing path is one of the N routing paths, and the second routing path passes through the first neighboring node of the first node.

In another possible implementation, in terms of obtaining the accumulated delay information of the target routing topology between the first neighboring node of the first node and the root node, the communication unit 1901 is specifically configured to receive a third packet from the first neighboring node of the first node, where the third packet includes the accumulated delay information of the target routing topology between the first neighboring node of the first node and the root node.

In another possible implementation, the communication unit 1901 is further configured to transmit a measurement signal to the first neighboring node of the first node, where the measurement signal is used to determine the information about the delay between the first node and the first neighboring node of the first node.

In another possible implementation, the communication unit 1901 is further configured to broadcast a fourth packet, where the fourth packet includes timestamp information, and the timestamp information is used by a second neighboring node of the first node to determine the target routing topology.

In another possible implementation, the communication unit 1901 is further configured to receive a second measurement signal from the first neighboring node. The processing unit 1902 is further configured to obtain the information about the delay between the first node and the first neighboring node based on the second measurement signal.

Optionally, the communication unit 1901 is further configured to send a first measurement signal to the first neighboring node, where the first measurement signal is used to trigger sending of the second measurement signal.

In another possible implementation, in terms of determining the information about the delay between the first node and the first neighboring node of the first node, the processing unit 1902 is specifically configured to determine the delay between the first node and the first neighboring node of the first node based on delay information in a first time period.

In another possible implementation, the delay between the first node and the first neighboring node of the first node is an average value of delay information in the first time period.

In another possible implementation, the first time period includes at least one time slice. In terms of determining the delay between the first node and the first neighboring node of the first node based on the delay information in the first time period, the processing unit 1902 is specifically configured to determine the delay between the first node and the first neighboring node of the first node based on delay information corresponding to the at least one time slice and a weight corresponding to the at least one time slice.

Optionally, a plurality of pieces of delay information are obtained in the first time period, and each piece of delay information corresponds to one time slice.

In another possible implementation, each of the at least one time slice has a same length, or there are a plurality of time slices in the first time period, and there are at least two time slices with different duration in the plurality of time slices.

In another possible implementation, there are the plurality of time slices in the first time period, and the plurality of time slices correspond to different weights.

In another possible implementation, a time slice that is closer to current time in the at least one time slice corresponds to a higher weight.

In another possible implementation, the communication unit 1901 is further configured to receive a fifth packet from the root node, where the fifth packet includes one or more of length indication information of the first time period, time slice length indication information, time slice weight indication information, and the like.

In another possible implementation, the communication unit 1901 is further configured to send the third packet to the root node through the target routing topology.

In another possible implementation, the target routing topology corresponds to M of the N routing paths, N is an integer and N≥2, and M is an integer and M≥2. The communication unit 1901 is further configured to send M third packets to the root node through the M routing paths, where each of the M packets is correspondingly sent through each of the M routing paths.

Optionally, a multi-fed and selective receiving feature is triggered only by a source node. In other words, only the source node sends redundant packets to the primary parent node and the secondary parent node. A relay node does not trigger multi-fed and selective receiving again during forwarding, to prevent a forwarding storm.

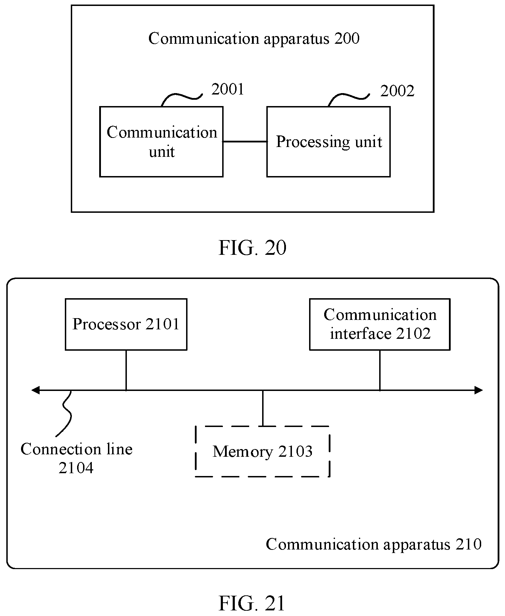

FIG. 20 is a diagram of a structure of a communication apparatus 200 according to an embodiment of this application. Optionally, the communication apparatus 200 may be an independent device, for example, a node. Alternatively, the communication apparatus 200 may be a component, for example, a chip or an integrated circuit, in an independent device (for example, a node). The communication apparatus 200 is configured to implement the foregoing communication method, for example, the communication method shown in FIG. 7 or FIG. 18.

In a possible design, the communication apparatus 200 includes a communication unit 2001 and a processing unit 2002. The communication apparatus 200 is configured to implement the foregoing communication method, for example, the communication method shown in FIG. 7 or FIG. 18. For example, the communication apparatus is configured to perform a method performed by a root node.

In a possible implementation, the communication unit 2001 is configured to receive a packet from a first node. The processing unit 2002 is configured to update a routing table based on the packet from the first node, where the routing table indicates that a next-hop node of a target routing topology passing through a second node is the first node, and the second node is a neighboring node of the root node.

This embodiment of this application and the foregoing method embodiments are based on a same concept, and bring same technical effects. For a specific principle, refer to the descriptions of the foregoing embodiments. Details are not described again.

FIG. 21 is a diagram of a structure of a communication apparatus 210 according to an embodiment of this application. The communication apparatus 210 may be an independent device, for example, a first node or a root node, or may be a component, for example, a chip, a software module, or an integrated circuit, included in an independent device. The communication apparatus 210 may include at least one processor 2101 and a communication interface 2102. Optionally, the communication apparatus 210 may further include at least one memory 2103. Further, optionally, the communication apparatus 210 may further include a connection line 2104. The processor 2101, the communication interface 2102, and/or the memory 2103 are connected through the connection line 2104, and/or communicate with each other through the connection line 2104, to transfer a control signal and/or a data signal.

The processor 2101 is a module for performing an arithmetic operation and/or a logical operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor (microprocessor unit, MPU), an application-specific integrated circuit (application-specific integrated Circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 2102 may be configured to provide an information input or output for the at least one processor, or configured to receive a signal sent from the outside and/or send a signal to the outside.

For example, the communication interface 2102 may include an interface circuit.

For example, the communication interface 2102 may include a wired link interface like an Ethernet cable, or may be a wireless link (Wi-Fi, Bluetooth, universal wireless transmission, an in-vehicle short-range communication technology, another short-range wireless communication technology, or the like) interface.

Optionally, the communication interface 2102 may further include a radio frequency transmitter, an antenna, and the like. When the communication interface 2102 includes an antenna, there may be one or more antennas.

In a possible design, if the communication apparatus 210 is an independent device, the communication interface 2102 may include a receiver and a transmitter. The receiver and the transmitter may be a same component or different components. When the receiver and the transmitter are a same component, the component may be referred to as a transceiver.

In another possible design, if the communication apparatus 210 is a chip or a circuit, the communication interface 2102 may include an input interface and an output interface, and the input interface and the output interface may be a same interface or different interfaces.

Optionally, a function of the communication interface 2102 may be implemented through a transceiver circuit or a dedicated transceiver chip.

The memory 2103 is configured to provide storage space, and the storage space may store data such as an operating system and a computer program. The memory 2103 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Functions and actions of modules or units in the communication apparatus 210 listed above are merely examples for description.

Functional units in the communication apparatus 210 may be configured to implement the foregoing communication method, for example, the communication method shown in FIG. 7 or FIG. 18, for example, configured to perform a method performed by a first node, a first neighboring node of the first node, a second neighboring node of the first node, or the like.

Optionally, the processor 2101 may be a processor (referred to as a dedicated processor for ease of differentiation) specially configured to perform the foregoing method, or may be a processor (referred to as a dedicated processor for ease of differentiation) that invokes a computer program to perform the foregoing method. Optionally, the at least one processor may alternatively include both a dedicated processor and a general-purpose processor.

Optionally, when the communication apparatus 210 includes at least one memory 2103, if the processor 2101 implements the foregoing communication method by invoking a computer program, the computer program may be stored in the memory 2103.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing communication method, for example, the communication method shown in FIG. 7 or FIG. 18.

An embodiment of this application further provides a computer-readable storage medium. The computer-readable storage medium stores instructions. When the instructions are run on at least one processor (or communication apparatus), the foregoing communication method is implemented, for example, the communication method shown in FIG. 7 or FIG. 18.

An embodiment of this application further provides a computer program product. The computer program product includes computer instructions, and the computer instructions are used to implement the foregoing communication method, for example, the communication method shown in FIG. 7 or FIG. 18.

An embodiment of this application further provides a terminal. The terminal includes the foregoing communication apparatus 190, communication apparatus 200, and/or communication apparatus 210.

In a possible implementation, the terminal includes a root node. Further, the terminal further includes a first node and/or a second node. Further, the terminal further includes a neighboring node of the first node and/or a second neighboring node of the first node.

For example, the terminal may include an intelligent terminal or a transportation means, for example, a vehicle, a robot, an uncrewed aerial vehicle, a ship, or a vessel. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), or the like. For another example, the robot may be a robot such as an automated guided vehicle (automated guided vehicle, AGV), a walkable conversational robot, or a service robot.

It should be noted that, in embodiments of this application, a word "example" or "for example" is used to give an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces).

For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise specified, ordinal numbers such as "first", "second", "M1", "M2", "M3", "M4", "M5", "S1", "S2", and "S3" used in embodiments of this application are used to distinguish a plurality of objects, and are not used to limit a sequence, a time sequence, a priority, or an importance degree of the plurality of objects. For another example, the first node and the second node are merely used to facilitate description of fresh parameters in different implementations, and do not represent different execution operations, importance degrees, structures, and the like.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

Persons of ordinary skill in the art may understand that all or a part of the steps of the embodiments may be implemented by hardware or a program instructing related hardware. The program may be stored in a computer-readable storage medium. The storage medium may be a read-only memory, a magnetic disk, an optical disc, or the like.

## Claims

1. A communication method, applied to a first node, wherein the method comprises:
obtaining accumulated delay information of N routing paths, wherein accumulated delay information of a first routing path indicates a delay of a packet of the first node reaching a root node through the first routing path, the first routing path is any one of the N routing paths, N is an integer and N≥1, and the first node and the root node belong to a first network domain; and
determining a target routing topology between the first node and the root node based on at least the accumulated delay information of the N routing paths, wherein the target routing topology is at least one of the N routing paths, and accumulated delay information corresponding to the target routing topology satisfies a first condition.

2. The method according to claim 1, wherein the method further comprises:
obtaining a hop count of the N routing paths; and
determining the target routing topology between the first node and the root node based on at least the accumulated delay information of the N routing paths comprises:
determining the target routing topology between the first node and the root node based on the accumulated delay information of the N routing paths and the hop count of the N routing paths.

3. The method according to claim 2, wherein
when there are a plurality of routing paths that satisfy a hop count constraint in the N routing paths, the target routing topology is a routing path that satisfies the hop count constraint and that is with a shortest delay in the N routing paths; or
when there is no routing path that satisfies the hop count constraint in the N routing paths, the target routing topology is a routing path with a shortest delay in the N routing paths.

4. The method according to claim 3, wherein the hop count constraint is that the hop count satisfies a second condition, and the hop count is associated with a quantity of forwarding hops of the packet of the first node reaching the root node.

5. The method according to claim 4, wherein the method further comprises:
sending hop count alarm information to the root node when a hop count of the target routing topology does not satisfy the hop count constraint.

6. The method according to any one of claims 3 to 5, wherein the method further comprises:
broadcasting a first packet, wherein the first packet comprises hop count constraint indication information of the first network domain, the hop count constraint indication information indicates a constraint condition that a hop count between a second node and the root node needs to satisfy, and the second node is a node other than the first node in the first network domain.

7. The method according to any one of claims 1 to 6, wherein the method further comprises:
sending a second packet to a first neighboring node of the first node, wherein the second packet comprises the accumulated delay information of the target routing topology between the first node and the root node, and the first neighboring node of the first node is connected to the first node in a point-to-point manner.

8. The method according to any one of claims 1 to 7, wherein obtaining the accumulated delay information of the N routing paths comprises:
obtaining accumulated delay information of a target routing topology between the first neighboring node of the first node and the root node, wherein the first neighboring node of the first node is connected to the first node in the point-to-point manner;
determining information about a delay between the first node and the first neighboring node of the first node; and
determining accumulated delay information of a second routing path based on the information about the delay between the first node and the first neighboring node of the first node and the accumulated delay information of the target routing topology between the first neighboring node of the first node and the root node, wherein the second routing path is one of the N routing paths, and the second routing path passes through the first neighboring node of the first node.

9. The method according to claim 8, wherein obtaining the accumulated delay information of the target routing topology between the first neighboring node of the first node and the root node comprises:
receiving a third packet from the first neighboring node of the first node, wherein the third packet comprises the accumulated delay information of the target routing topology between the first neighboring node of the first node and the root node.

10. The method according to claim 8 or 9, wherein the method further comprises:
transmitting a measurement signal to the first neighboring node of the first node, wherein the measurement signal is used to determine the information about the delay between the first node and the first neighboring node of the first node.

11. The method according to any one of claims 8 to 10, wherein determining the information about the delay between the first node and the first neighboring node of the first node comprises:
determining the delay between the first node and the first neighboring node of the first node based on delay information in a first time period.

12. The method according to claim 11, wherein the delay between the first node and the first neighboring node of the first node is an average value of delay information in the first time period.

13. The method according to claim 11 or 12, wherein the first time period comprises at least one time slice; and
determining the delay between the first node and the first neighboring node of the first node based on the delay information in the first time period comprises:
determining the delay between the first node and the first neighboring node of the first node based on delay information corresponding to the at least one time slice and a weight corresponding to the at least one time slice.

14. The method according to claim 13, wherein each of the at least one time slice has a same length, or
there are a plurality of time slices in the first time period, and there are at least two time slices with different duration in the plurality of time slices.

15. The method according to claim 13 or 14, wherein there are the plurality of time slices in the first time period, and the plurality of time slices correspond to different weights.

16. The method according to any one of claims 13 to 15, wherein a time slice that is closer to current time in the at least one time slice corresponds to a higher weight.

17. The method according to any one of claims 11 to 16, wherein the method further comprises:
receiving a fifth packet from the root node, wherein the fifth packet comprises one or more of length indication information of the first time period, time slice length indication information, time slice weight indication information, and the like.

18. The method according to any one of claims 1 to 17, wherein the method further comprises:
sending the third packet to the root node through the target routing topology.

19. The method according to claim 18, wherein the target routing topology corresponds to M of the N routing paths, N is an integer and N≥2, M is an integer and M≥2, and the method further comprises:
sending M third packets to the root node through the M routing paths, wherein each of the M packets is correspondingly sent through each of the M routing paths.

20. The method according to any one of claims 1 to 19, wherein the method further comprises:
receiving a query packet from the root node, wherein the query packet is used to query for route configuration information of the first node; and
feeding back the route configuration information of the first node to the root node, wherein the route configuration information comprises one or more of time slice length information of the first node, time slice weight information of the first node, the hop count constraint indication information of the first network domain, and the like.

21. The method according to any one of claims 1 to 20, wherein a delay comprises one or more of a data packet delay, a data packet jitter, a jitter delay of a neighboring node of the first node, and the like.

22. A communication method, applied to a root node, wherein the method comprises:
receiving a packet from a first node; and
updating a routing table based on the packet from the first node, wherein the routing table indicates that a next-hop node of a target routing topology passing through a second node is the first node, and the second node is a neighboring node of the root node.

23. A communication apparatus, wherein the communication apparatus comprises a processor and a communication interface; and
when the processor invokes a computer program or instructions in a memory, the method according to any one of claims 1 to 21 is performed.

24. A communication apparatus, wherein the communication apparatus comprises a processor and a communication interface; and
when the processor invokes a computer program or instructions in a memory, the method according to claim 22 is performed.

25. A chip, wherein the chip comprises a processor and a communication interface; and
the processor is configured to: implement the method according to any one of claims 1 to 21, or implement the method according to claim 22.

26. A communication system, wherein the communication system comprises a first node and a root node, wherein
the first node comprises the communication apparatus according to claim 23; and
the root node comprises the communication apparatus according to claim 24.

27. A terminal, wherein the terminal comprises the communication apparatus according to claim 23, or comprises the communication apparatus according to claim 24, or comprises the chip according to claim 25, or comprises the communication system according to claim 26.

28. A computer-readable storage medium, wherein the computer-readable storage medium is configured to store instructions or a computer program; and
when the instructions or the computer program is executed, the method according to any one of claims 1 to 21 is implemented, or the method according to claim 22 is implemented.
